# EUROPEAN PATENT APPLICATION

(11) **EP 4 266 808 A1**
(43) Date of publication of application: **25.10.2023**
(21) Application number: 22739151.3
(22) Date of filing: 14.01.2022
(51) Int. Cl.: H04W 74/00, H04W 72/00

(54) **COMMUNICATION METHOD AND APPARATUS APPLICABLE TO NON-TERRESTRIAL NETWORK (NTN)**

(30) Priority: 15.01.2021 CN 202110056540
(71) Applicant: Huawei Technologies Co., Ltd., Shenzhen, Guangdong 518129 (CN)
(72) Inventor: CHEN, Ying, Shenzhen, Guangdong 518129 (CN); LUO, Hejia, Shenzhen, Guangdong 518129 (CN); ZHOU, Jianwei, Shenzhen, Guangdong 518129 (CN); LI, Rong, Shenzhen, Guangdong 518129 (CN); WANG, Jun, Shenzhen, Guangdong 518129 (CN); SONG, Xinghua, Shenzhen, Guangdong 518129 (CN)
(74) Representative: Gill Jennings & Every LLP
(86) International application number: PCT/CN2022/072178
(87) International publication number: WO 2022/152276

(57) **Abstract**

Embodiments of this application provide a communication method and apparatus applicable to a non-terrestrial communication network NTN, and relate to the field of communication technologies, to resolve the following technical problem in an existing NTN: A terminal device can transmit only one Msg3 when initially transmitting the Msg3, and consequently, a success rate of decoding the Msg3 by a network device is low, and the terminal device fails to perform access or a delay of successful access is large. The method includes: The terminal device obtains a first quantity N (301), where the first quantity N indicates a number of repetition of a message 3 Msg3, or the first quantity N indicates a number of aggregation of a message 3 Msg3, and the Msg3 is a message sent by the terminal device through a physical uplink shared channel PUSCH in a random access process; and the terminal device sends N Msg3 based on the first quantity N in an initial transmission process (302), where the initial transmission process is a process in which the terminal device sends the Msg3 for a first time.

## Description

This application claims priority to Chinese Patent Application No. 202110056540.1, filed with the China National Intellectual Property Administration on January 15, 2021 and entitled "COMMUNICATION METHOD AND APPARATUS APPLICABLE TO NON-TERRESTRIAL COMMUNICATION NETWORK NTN", which is incorporated herein by reference in its entirety.

### TECHNICAL FIELD

This application relates to the field of communication technologies, and in particular, to a communication method and apparatus applicable to a non-terrestrial communication network NTN.

### BACKGROUND

In a contention-based random access process in an existing communication system, a terminal device may add a random access sequence to a message 1 (message 1, Msg1) and send the message 1 to a network device. After receiving the Msg1, the network device may add a random access response to a Msg2 and send the Msg2 to the terminal device. After receiving the Msg2, the terminal device may add data to a Msg3 and send the Msg3 to the network device. After receiving the Msg3, the network device may add a contention decision result to a Msg4 and send the Msg4 to the terminal device. The terminal device may establish a communication connection to the network device based on the contention decision result.

Currently, in a 3rd generation partnership project (3rd generation partnership project, 3GPP) new radio (new radio, NR) protocol, the network device may schedule the Msg3 by using the Msg2. Specifically, the network device may indicate, by using the Msg2, a time-frequency resource to be allocated to the Msg3. The time-frequency resource is allocated based on one time of transmission. In other words, only one Msg3 can be transmitted in an initial transmission process.

In a non-terrestrial communication network (non-terrestrial network, NTN), a distance between a terminal device and a network device is long. Because the terminal device can transmit only one Msg3 during initial transmission, when the network device receives the Msg3 sent by the terminal device, the network device may fail to decode the Msg3 because a signal-to-noise ratio (signal-to-noise ratio, SNR) of the Msg3 cannot meet a requirement for successful decoding. Consequently, the terminal device fails to perform access. In this case, if the terminal device retransmits one Msg3 to the network device, because the distance between the terminal device and the network device is long, and a transmission delay is large, time for successful access of the terminal device is significantly delayed.

### SUMMARY

In view of this, embodiments of this application provide a communication method and apparatus applicable to a non-terrestrial communication network NTN, to resolve the following technical problem in an existing NTN: A terminal device can transmit only one Msg3 when initially transmitting the Msg3, and consequently, a success rate of decoding the Msg3 by a network device is low, and the terminal device fails to perform access or a delay of successful access is large.

According to a first aspect, an embodiment of this application provides a communication method applicable to a non-terrestrial communication network NTN. The method includes: A terminal device obtains a first quantity N, and sends N Msg3 based on the first quantity N in an initial transmission process. The first quantity N indicates a number of repetition of the message 3 Msg3, or the first quantity N indicates a number of aggregation of the message 3 Msg3; the Msg3 is a message sent by the terminal device through a physical uplink shared channel PUSCH in a random access process; and the initial transmission process is a process in which the terminal device sends the Msg3 for a first time.

Based on the first aspect, the terminal device obtains the first quantity N, and may send the N Msg3 based on the first quantity N in the initial transmission process. This increases a success rate of decoding, by a network device, the Msg3 received in the initial transmission process, so that an access success rate of the terminal device is increased, an access delay of the terminal device is reduced, and transmission reliability of a communication system is improved.

In a possible design, the terminal device obtains a message 2 Msg2 including the first quantity N, and the Msg2 is a message received by the terminal device through a physical downlink shared channel PDSCH in the random access process.

Based on this possible design, the first quantity N may be indicated in the Msg2 in an explicit indication manner, so that the terminal device determines the first quantity N in the explicit indication manner.

In a possible design, the first quantity N is located in an uplink grant field of the Msg2.

Based on this possible design, the uplink grant field in the existing Msg2 may be extended, to explicitly indicate the first quantity N, so that a feasible solution is provided for indicating the first quantity N in the Msg2 in an explicit indication manner.

In a possible design, the terminal device obtains a message 2 Msg2 including a PUSCH time domain resource allocation field, where the Msg2 is a message received by the terminal device through a physical downlink shared channel PDSCH in the random access process, and the PUSCH time domain resource allocation field includes a first index indicating a time domain resource occupied by the Msg3; and the terminal device determines the first quantity N based on a first correspondence and the first index, where the first correspondence includes a correspondence between the first index and the first quantity N.

Based on this possible design, the first quantity N may be indicated in the Msg2 in an implicit indication manner, so that the terminal device determines the first quantity N based on the first correspondence and the first index that is included in the PUSCH time domain resource allocation field in the Msg2. A feasible solution is provided for indicating the first quantity N in the Msg2 in the implicit indication manner.

In a possible design, the terminal device obtains a message 2 Msg2 including a PUSCH frequency domain resource allocation field, where the Msg2 is a message received by the terminal device through a physical downlink shared channel PDSCH in the random access process, and the PUSCH frequency domain resource allocation field indicates locations of frequency domain resource blocks occupied by the N Msg3, or the PUSCH frequency domain resource allocation field indicates start locations of frequency domain resource blocks corresponding to the N Msg3 and lengths of the frequency domain resource blocks; and the terminal device determines the first quantity N based on the PUSCH frequency domain resource allocation field.

Based on this possible design, the first quantity N may be indicated in the Msg2 in an implicit indication manner, so that the terminal device determines the first quantity N based on the PUSCH frequency domain resource allocation field in the Msg2. A feasible solution is provided for indicating the first quantity N in the Msg2 in the implicit indication manner.

In a possible design, the terminal device obtains location information of a network device, and the terminal device determines the first quantity N based on a second correspondence and the location information of the network device. The second correspondence includes a correspondence between the location information of the network device and the first quantity N.

In a possible design, the terminal device receives a system message including the first quantity N from a network device.

In a possible design, the terminal device receives a signal from a network device, and the terminal device determines the first quantity N based on a third correspondence and signal strength of the signal. The third correspondence includes a correspondence between the signal strength and the first quantity N.

Based on the foregoing three possible designs, the terminal device may further determine the first quantity N based on the location information of the network device, the received system message, or the signal strength of the signal received from the network device. A plurality of feasible solutions are provided for the terminal device to obtain the first quantity N.

In a possible design, the terminal device obtains first identification information. The first identification information indicates that the first quantity N indicates the number of repetition of the Msg3, or the first identification information indicates that the first quantity N indicates the number of aggregation of the Msg3.

In a possible design, the first identification information is located in the message 2 Msg2, radio resource control RRC signaling, media access control control element MAC CE signaling, or downlink control information DCI signaling, and the Msg2 is the message received by the terminal device through the physical downlink shared channel PDSCH in the random access process.

Based on the foregoing two possible designs, the terminal device can determine, based on the obtained first identification information, whether the first quantity N indicates the number of repetition of the Msg3 or the number of aggregation of the Msg3, and then repeat or aggregate the Msg3 based on the first identification information.

In a possible design, the terminal device obtains first indication information indicating a time domain resource occupied by a first Msg3 in the N Msg3, and determines, based on the first indication information, a start orthogonal frequency division multiplexing OFDM symbol of a K^{th} Msg3 as a start OFDM symbol of a next slot of a slot in which a last OFDM symbol occupied by a (K-1)^{th} Msg3 is located, where K is less than or equal to N, or determines, based on the first indication information, a start OFDM symbol of a K^{th} Msg3 as a next OFDM symbol of a last OFDM symbol occupied by a (K-1)^{th} Msg3, where K is less than or equal to N.

Based on this possible design, the terminal device may send the Msg3 based on the time domain resource indicated by the first indication information, so that a feasible solution is provided for the terminal device to send the N Msg3.

In a possible design, the first indication information is the PUSCH time domain resource allocation field in the message 2 Msg2. The Msg2 is the message received by the terminal device through the physical downlink shared channel PDSCH in the random access process, the PUSCH time domain resource allocation field includes the first index, and the first index indicates the time domain resource occupied by the Msg3.

In a possible design, that the terminal device obtains first indication information includes: The terminal device receives radio resource control the RRC signaling from the network device, where the RRC signaling includes the first indication information.

Based on the foregoing two possible designs, the terminal device may determine the first indication information based on the received Msg2, or may obtain the first indication information based on the received RRC signaling. This is not limited.

In a possible design, the terminal device obtains second indication information indicating a frequency domain resource occupied by each of the N Msg3, and determines, based on the second indication information, the frequency domain resource occupied by each of the N Msg3.

Based on this possible design, the terminal device may send the Msg3 based on the frequency domain resource indicated by the second indication information, so that a feasible solution is provided for the terminal device to send the N Msg3.

In a possible design, the second indication information is the PUSCH frequency domain resource allocation field in the message 2 Msg2. The Msg2 is the message received by the terminal device through the physical downlink shared channel PDSCH in the random access process. The PUSCH frequency domain resource allocation field indicates the location of the frequency domain resource block occupied by each Msg3, the PUSCH frequency domain resource allocation field indicates a start location of a frequency domain resource block corresponding to each Msg3 and a length of the frequency domain resource block, or the PUSCH frequency domain resource allocation field indicates a configuration rule of a location of a frequency domain resource block corresponding to each Msg3.

In a possible design, the terminal device receives the radio resource control RRC signaling from the network device, and the RRC signaling includes the second indication information.

Based on the foregoing two possible designs, the terminal device may determine the second indication information based on the received Msg2, or may obtain the second indication information based on the received RRC signaling. This is not limited.

In a possible design, after the terminal device sends the N Msg3 based on the first quantity N in the initial transmission process, the method further includes: After the terminal device receives a negative acknowledgment NACK from the network device, the terminal device obtains a first quantity M, and retransmits M Msg3 based on the first quantity M.

Based on this possible design, after the terminal device receives the NACK sent by the network device, the terminal device may obtain the first quantity M, and send the M Msg3 based on the first quantity M in the retransmission process. This increases a success rate of decoding, by the network device, the Msg3 received in the retransmission process, so that an access success rate of the terminal device is increased, an access delay of the terminal device is reduced, and transmission reliability of a communication system is improved.

In a possible design, the terminal device obtains a message 2 Msg2 including a first MCS level, determines a second MCS level based on the first MCS level, and sends the N Msg3 based on the second MCS level in the initial transmission process. The Msg2 is the message received by the terminal device through the physical downlink shared channel PDSCH in the random access process, and the second MCS level is less than the first MCS level.

Based on this possible design, the terminal device sends the N Msg3 in the initial transmission process by using the second MCS level that is less than the first MCS level. This can increase a success rate of decoding, by the network device, the Msg3 received in the initial transmission process, so that an access success rate of the terminal device is increased, an access delay of the terminal device is reduced, and transmission reliability of a communication system is improved.

In a possible design, the terminal device obtains a preset quantity of levels, and the terminal device determines a difference between the first MCS level and the preset quantity of levels as the second MCS level.

Based on this possible design, the terminal device may determine the difference between the first MCS level and the preset quantity of levels as the second MCS level, so that a feasible solution is provided for the terminal device to determine the second MCS level based on the first MCS level.

In a possible design, the terminal device receives the preset quantity of levels from the network device; the terminal device obtains the location information of the network device, and the terminal device determines the preset quantity of levels based on the location information of the network device; or the terminal device receives the signal from the network device, and the terminal device determines the preset quantity of levels based on the signal strength of the signal.

Based on this possible design, the terminal device may directly receive the preset quantity of levels sent by the network device, may determine the preset quantity of levels based on the location information of the network device, or may determine the preset quantity of levels based on the signal strength of the signal of the network device. This is not limited.

According to a second aspect, an embodiment of this application provides a communication apparatus applicable to a non-terrestrial communication network NTN. The communication apparatus may implement functions performed by the terminal device in the first aspect or the possible designs of the first aspect, and the functions may be implemented by hardware by executing corresponding software. The hardware or the software includes one or more modules corresponding to the functions, for example, a transceiver module. The transceiver module is configured to obtain a first quantity N and send N Msg3 based on the first quantity N in an initial transmission process. The first quantity N indicates a number of repetition of the message 3 Msg3, or the first quantity N indicates a number of aggregation of the message 3 Msg3; the Msg3 is a message sent by the transceiver module through a physical uplink shared channel PUSCH in a random access process; and the initial transmission process is a process in which the transceiver module sends the Msg3 for a first time.

It should be noted that, for a specific implementation of the communication apparatus, refer to behavior functions of the terminal device in the communication method applicable to a non-terrestrial communication network NTN provided in the first aspect or any possible design of the first aspect. For technical effects brought by the communication apparatus, refer to technical effects brought by any possible design of the first aspect. Details are not described again.

According to a third aspect, an embodiment of this application provides a communication apparatus applicable to a non-terrestrial communication network NTN. The communication apparatus may be a communication apparatus, or a chip or a system-on-a-chip in the communication apparatus. The communication apparatus may implement functions performed by the terminal device in the foregoing aspects or the possible designs, and the functions may be implemented by hardware. In a possible design, the communication apparatus may include a transceiver. The transceiver may be configured to support the communication apparatus in implementing the functions in the first aspect or any possible design of the first aspect. For example, the transceiver may be configured to obtain a first quantity N and send N Msg3 based on the first quantity N in an initial transmission process. The first quantity N indicates a number of repetition of the message 3 Msg3, or the first quantity N indicates a number of aggregation of the message 3 Msg3; the Msg3 is a message sent by a transceiver module through a physical uplink shared channel PUSCH in a random access process; and the initial transmission process is a process in which the terminal device sends the Msg3 for a first time. In another possible design, the communication apparatus may further include a processor and a memory. The memory is configured to store computer-executable instructions and data that are necessary for the terminal device. When the communication apparatus runs, the transceiver and the processor execute the computer-executable instructions stored in the memory, so that the communication apparatus performs the communication method applicable to a non-terrestrial communication network NTN in the first aspect or any possible design of the first aspect.

For a specific implementation of the communication apparatus in the third aspect, refer to behavior functions of the terminal device in the communication method applicable to a non-terrestrial communication network NTN provided in the first aspect or any possible design of the first aspect.

According to a fourth aspect, an embodiment of this application provides a communication method applicable to a non-terrestrial communication network NTN. The method includes: A network device sends, to a terminal device, a message 2 Msg2 used to schedule a message 3 Msg3; and the network device receives N messages 3 Msg3 sent by the terminal device based on a first quantity N in an initial transmission process. The first quantity N indicates a number of repetition of the message 3 Msg3, or the first quantity N indicates a number of aggregation of the message 3 Msg3; the Msg2 is a message sent by the network device through a physical downlink shared channel PDSCH in a random access process; the Msg3 is a message received by the network device through a physical uplink shared channel PUSCH in the random access process; and the initial transmission process is a process in which the terminal device sends the Msg3 for a first time.

Based on the fourth aspect, the network device receives, in the initial transmission process, the N Msg3 sent by the terminal device. This can increase a success rate of decoding, by the network device, the Msg3 received in the initial transmission process, so that an access success rate of the terminal device is increased, an access delay of the terminal device is reduced, and transmission reliability of a communication system is improved.

In a possible design, the network device sends a Msg2 including the first quantity N to the terminal device.

Based on this possible design, the network device may indicate the first quantity N in the Msg2 in an explicit indication manner, so that the terminal device determines the first quantity N in the explicit indication manner.

In a possible design, the first quantity N is located in an uplink grant field of the Msg2.

Based on this possible design, the network device may extend the uplink grant field in the existing Msg2, to explicitly indicate the first quantity N, so that a feasible solution is provided for indicating the first quantity N in the Msg2 in an explicit indication manner.

In a possible design, the Msg2 includes a PUSCH time domain resource allocation field, the PUSCH time domain resource allocation field includes a first index, and the first index indicates a time domain resource occupied by the Msg3, so that the terminal device determines the first quantity N based on a first correspondence and the first index. The first correspondence includes a correspondence between the first index and the first quantity N.

Based on this possible design, the network device may indicate the first quantity N in the Msg2 in an implicit indication manner, so that the terminal device determines the first quantity N based on the first correspondence and the first index that is included in the PUSCH time domain resource allocation field in the Msg2. A feasible solution is provided for indicating the first quantity N in the Msg2 in the implicit indication manner.

In a possible design, the Msg2 includes a PUSCH frequency domain resource allocation field, and the PUSCH frequency domain resource allocation field indicates locations of frequency domain resource blocks occupied by the N Msg3, or the PUSCH frequency domain resource allocation field indicates start locations of frequency domain resource blocks corresponding to the N Msg3 and lengths of the frequency domain resource blocks, so that the terminal device determines the first quantity N based on the PUSCH frequency domain resource allocation field.

Based on this possible design, the network device may indicate the first quantity N in the Msg2 in an implicit indication manner, so that the terminal device determines the first quantity N based on the PUSCH frequency domain resource allocation field in the Msg2. A feasible solution is provided for indicating the first quantity N in the Msg2 in the implicit indication manner.

In a possible design, the network device sends location information of the network device to the terminal device, so that the terminal device determines the first quantity N based on a second correspondence and the location information of the network device. The second correspondence includes a correspondence between the location information of the network device and the first quantity N.

In a possible design, the network device sends a system message including the first quantity N to the terminal device.

In a possible design, the network device sends a signal to the terminal device, so that the terminal device determines the first quantity N based on a third correspondence and signal strength of the signal. The third correspondence includes a correspondence between the signal strength and the first quantity N.

Based on the foregoing three possible designs, the network device may send the location information of the network device to the terminal device, so that the terminal device determines the first quantity N based on the location information of the network device; the network device may send the system message including the first quantity N to the terminal device, so that the terminal device determines the first quantity N based on the received system message; or the network device may send the signal to the terminal device, so that the terminal device determines the first quantity N based on the signal strength of the signal received from the network device. A plurality of feasible solutions are provided for the terminal device to obtain the first quantity N.

In a possible design, the network device sends the first identification information to the terminal device. The first identification information indicates that the first quantity N indicates the number of repetition of the Msg3, or the first identification information indicates that the first quantity N indicates the number of aggregation of the Msg3.

In a possible design, the first identification information is located in the message 2 Msg2, radio resource control RRC signaling, media access control control element MAC CE signaling, or downlink control information DCI signaling.

Based on the foregoing two possible designs, the network device sends the first identification information to the terminal device, so that the terminal device can determine, based on the first identification information, whether the first quantity N indicates the number of repetition of the Msg3 or the number of aggregation of the Msg3, and then repeat or aggregate the Msg3 based on the first identification information.

In a possible design, the network device sends, to the terminal device, first indication information indicating a time domain resource occupied by a first Msg3 in the N Msg3, so that the terminal device determines, based on the first indication information, a start orthogonal frequency division multiplexing OFDM symbol of a K^{th} Msg3 as a start OFDM symbol of a next slot of a slot in which a last OFDM symbol occupied by a (K-1)^{th} Msg3 is located, where K is less than or equal to N; or determines, based on the first indication information, a start OFDM symbol of a K^{th} Msg3 as a next OFDM symbol of a last OFDM symbol occupied by a (K-1)^{th} Msg3, where K is less than or equal to N.

Based on this possible design, the network device sends the first indication information to the terminal device, so that the terminal device may send the Msg3 based on the time domain resource indicated by the first indication information. This provides a feasible solution for the terminal device to send the N Msg3.

In a possible design, the first indication information is the PUSCH time domain resource allocation field in the message 2 Msg2, the PUSCH time domain resource allocation field includes the first index, and the first index indicates the time domain resource occupied by the Msg3.

In a possible design, the network device sends radio resource control RRC signaling including the first indication information to the terminal device.

Based on the foregoing two possible designs, the network device may indicate the first indication information to the terminal device by using the Msg2, or may indicate the first indication information by using the RRC signaling. This is not limited.

In a possible design, the network device sends, to the terminal device, second indication information indicating the frequency domain resource occupied by each of the N Msg3, so that the terminal device determines, based on the second indication information, the frequency domain resource occupied by each of the N Msg3.

Based on this possible design, the network device sends the second indication information to the terminal device, so that the terminal device may send the Msg3 based on the frequency domain resource indicated by the second indication information. This provides a feasible solution for the terminal device to send the N Msg3.

In a possible design, the second indication information is the PUSCH frequency domain resource allocation field in the message 2 Msg2. The PUSCH frequency domain resource allocation field indicates the location of the frequency domain resource block occupied by each Msg3, the PUSCH frequency domain resource allocation field indicates a start location of a frequency domain resource block corresponding to each Msg3 and a length of the frequency domain resource block, or the PUSCH frequency domain resource allocation field indicates a configuration rule of a location of a frequency domain resource block corresponding to each Msg3.

In a possible design, the network device sends RRC signaling including the second indication information to the terminal device.

Based on the foregoing two possible designs, the network device may indicate the second indication information to the terminal device by using the Msg2, or may indicate the second indication information by using the RRC signaling. This is not limited.

In a possible design, after the network device fails to decode the received N Msg3, the network device sends a negative acknowledgment NACK to the terminal device, and receives M Msg3 retransmitted by the terminal device in a retransmission process.

Based on this possible design, when the network device fails to decode the received N Msg3, the network device may send the NACK to the terminal device, to receive the M Msg3 retransmitted by the terminal device in the retransmission process. This increases a success rate of decoding, by the network device, the Msg3 received in the retransmission process, so that an access success rate of the terminal device is increased, an access delay of the terminal device is reduced, and transmission reliability of a communication system is improved.

In a possible design, the Msg2 includes a first MCS level, so that the terminal device determines a second MCS level based on the first MCS level, and sends the N Msg3 based on the second MCS level in the initial transmission process. The second MCS level is less than the first MCS level.

Based on this possible design, the network device sends the Msg2 including the first MCS level to the terminal device, so that the terminal device may send the N Msg3 in the initial transmission process by using the second MCS level that is less than the first MCS level. This can increase a success rate of decoding, by the network device, the Msg3 received in the initial transmission process, so that an access success rate of the terminal device is increased, an access delay of the terminal device is reduced, and transmission reliability of a communication system is improved.

In a possible design, the second MCS level is a difference between the first MCS level and a preset quantity of levels.

Based on this possible design, the difference between the first MCS level and the preset quantity of levels may be determined as the second MCS level, so that a feasible solution is provided for the terminal device to determine the second MCS level based on the first MCS level.

In a possible design, the network device sends the preset quantity of levels to the terminal device; the network device sends the location information of the network device to the terminal device, so that the terminal device determines the preset quantity of levels based on the location information of the network device; or the network device sends the signal to the terminal device, so that the terminal device determines the preset quantity of levels based on the signal strength of the signal.

Based on this possible design, the terminal device may directly receive the preset quantity of levels sent by the network device, may determine the preset quantity of levels based on the location information of the network device, or may determine the preset quantity of levels based on the signal strength of the signal of the network device. This is not limited.

According to a fifth aspect, an embodiment of this application provides a communication apparatus applicable to a non-terrestrial communication network NTN. The communication apparatus may implement functions performed by the network device in the fourth aspect or the possible designs of the fourth aspect, and the functions may be implemented by hardware by executing corresponding software. The hardware or the software includes one or more modules corresponding to the functions, for example, a transceiver module. The transceiver module is configured to: send, to a terminal device, a message 2 Msg2 used to schedule a message 3 Msg3, and receive N messages 3 Msg3 sent by the terminal device based on a first quantity N in an initial transmission process. The first quantity N indicates a number of repetition of the message 3 Msg3, or the first quantity N indicates a number of aggregation of the message 3 Msg3; the Msg2 is a message sent by a network device through a physical downlink shared channel PDSCH in a random access process; the Msg3 is a message received by the network device through a physical uplink shared channel PUSCH in the random access process; and the initial transmission process is a process in which the terminal device sends the Msg3 for a first time.

It should be noted that, for a specific implementation of the communication apparatus, refer to behavior functions of the terminal device in the communication method applicable to a non-terrestrial communication network NTN provided in the fourth aspect or any possible design of the fourth aspect. For technical effects brought by the communication apparatus, refer to technical effects brought by any possible design of the fourth aspect. Details are not described again.

According to a sixth aspect, an embodiment of this application provides a communication apparatus applicable to a non-terrestrial communication network NTN. The communication apparatus may be a communication apparatus, or a chip or a system-on-a-chip in the communication apparatus. The communication apparatus may implement functions performed by the network device in the foregoing aspects or the possible designs, and the functions may be implemented by hardware. In a possible design, the communication apparatus may include a transceiver. The transceiver may be configured to support the communication apparatus in implementing the functions in the fourth aspect or any possible design of the fourth aspect. For example, the transceiver may be configured to: send, to a terminal device, a message 2 Msg2 used to schedule a message 3 Msg3; and receive N messages 3 Msg3 sent by the terminal device based on a first quantity N in an initial transmission process. The first quantity N indicates a number of repetition of the message 3 Msg3, or the first quantity N indicates a number of aggregation of the message 3 Msg3; the Msg2 is a message sent by a network device through a physical downlink shared channel PDSCH in a random access process; the Msg3 is a message received by the network device through a physical uplink shared channel PUSCH in the random access process; and the initial transmission process is a process in which the terminal device sends the Msg3 for a first time. In another possible design, the communication apparatus may further include a processor and a memory. The memory is configured to store computer-executable instructions and data that are necessary for the network device. When the communication apparatus runs, the transceiver and the processor execute the computer-executable instructions stored in the memory, so that the communication apparatus performs the communication method applicable to a non-terrestrial communication network NTN in the fourth aspect or any possible design of the fourth aspect.

For a specific implementation of the communication apparatus in the sixth aspect, refer to behavior functions of the network device in the communication method applicable to a non-terrestrial communication network NTN provided in the fourth aspect or any possible design of the fourth aspect.

According to a seventh aspect, a communication apparatus applicable to a non-terrestrial communication network NTN is provided. The communication apparatus includes one or more processors and one or more memories, the one or more memories are coupled to the one or more processors, the one or more memories are configured to store a computer program or instructions, and the one or more processors are configured to run the computer program or the instructions. When the one or more processors execute computer instructions or the instructions, the communication apparatus is enabled to perform the communication method applicable to a non-terrestrial communication network NTN described in the first aspect or any possible design of the first aspect, or the communication method applicable to a non-terrestrial communication network NTN described in the fourth aspect or any possible design of the fourth aspect. In a possible implementation, the memory is located outside the communication apparatus. In another possible implementation, the memory is located in the communication apparatus. In this embodiment of this application, the processor and the memory may alternatively be integrated into a same component; in other words, the processor and the memory may alternatively be integrated.

In a possible design, the communication apparatus further includes one or more communication interfaces, the one or more communication interfaces are coupled to the one or more processors, and the one or more communication interfaces are configured to communicate with another module outside the communication apparatus. The one or more communication interfaces are coupled to the one or more processors.

According to an eighth aspect, a communication apparatus applicable to a non-terrestrial communication network NTN is provided. The communication apparatus includes a communication interface and a logic circuit, and the communication interface is coupled to the logic circuit. The logic circuit is configured to perform the communication method applicable to a non-terrestrial communication network NTN described in the first aspect or any possible design of the first aspect, or the communication method applicable to a non-terrestrial communication network NTN described in the fourth aspect or any possible design of the fourth aspect. The communication interface is configured to communicate with another module outside the communication apparatus.

According to a ninth aspect, a computer-readable storage medium is provided. The computer-readable storage medium stores computer instructions or a program. When the computer instructions or the program is run on a computer, the computer is enabled to perform the communication method applicable to a non-terrestrial communication network NTN described in the first aspect or any possible design of the first aspect, or the communication method applicable to a non-terrestrial communication network NTN described in the fourth aspect or any possible design of the fourth aspect.

According to a tenth aspect, a computer program product including computer instructions is provided. When the computer program product is run on a computer, the computer is enabled to perform the communication method applicable to a non-terrestrial communication network NTN described in the first aspect or any possible design of the first aspect, or the communication method applicable to a non-terrestrial communication network NTN described in the fourth aspect or any possible design of the fourth aspect.

According to an eleventh aspect, an embodiment of this application provides a computer program. When the computer program is run on a computer, the computer is enabled to perform the communication method applicable to a non-terrestrial communication network NTN described in the first aspect or any possible design of the first aspect, or the communication method applicable to a non-terrestrial communication network NTN described in the fourth aspect or any possible design of the fourth aspect.

For technical effects brought by any design manner of the seventh aspect to the eleventh aspect, refer to technical effects brought by any possible design of the first aspect, or refer to technical effects brought by any possible design of the fourth aspect. Details are not described again.

According to a twelfth aspect, a communication system is provided. The communication system includes the terminal device described in either of the second aspect and the third aspect, and the network device described in either of the fifth aspect and the sixth aspect.

### BRIEF DESCRIPTION OF DRAWINGS

FIG. 1a is a flowchart of a random access process according to an embodiment of this application;
FIG. 1b is a schematic diagram of a communication system according to an embodiment of this application;
FIG. 1c is a schematic diagram of a communication system according to an embodiment of this application;
FIG. 1d is a schematic diagram of a communication system according to an embodiment of this application;
FIG. 1e is a schematic diagram of a communication system according to an embodiment of this application;
FIG. 2 is a schematic diagram of composition of a communication apparatus according to an embodiment of this application;
FIG. 3 is a flowchart of a communication method applicable to a non-terrestrial communication network NTN according to an embodiment of this application;
FIG. 4 is a schematic diagram of a frame structure of a Msg2 according to an embodiment of this application;
FIG. 5 is a schematic diagram of a frame structure of an uplink grant field according to an embodiment of this application;
FIG. 6 is a schematic diagram of a frame structure of an uplink grant field according to an embodiment of this application;
FIG. 7 is a schematic diagram of a frame structure of an uplink grant field according to an embodiment of this application;
FIG. 8 is a schematic diagram of a time domain resource according to an embodiment of this application;
FIG. 9 is a schematic diagram of a time domain resource according to an embodiment of this application;
FIG. 10 is a flowchart of a communication method applicable to a non-terrestrial communication network NTN according to an embodiment of this application;
FIG. 11 is a flowchart of a communication method applicable to a non-terrestrial communication network NTN according to an embodiment of this application;
FIG. 12 is a schematic diagram of composition of a terminal device according to an embodiment of this application; and
FIG. 13 is a schematic diagram of composition of a network device according to an embodiment of this application.

### DESCRIPTION OF EMBODIMENTS

Before embodiments of this application are described, technical terms in embodiments of this application are described.

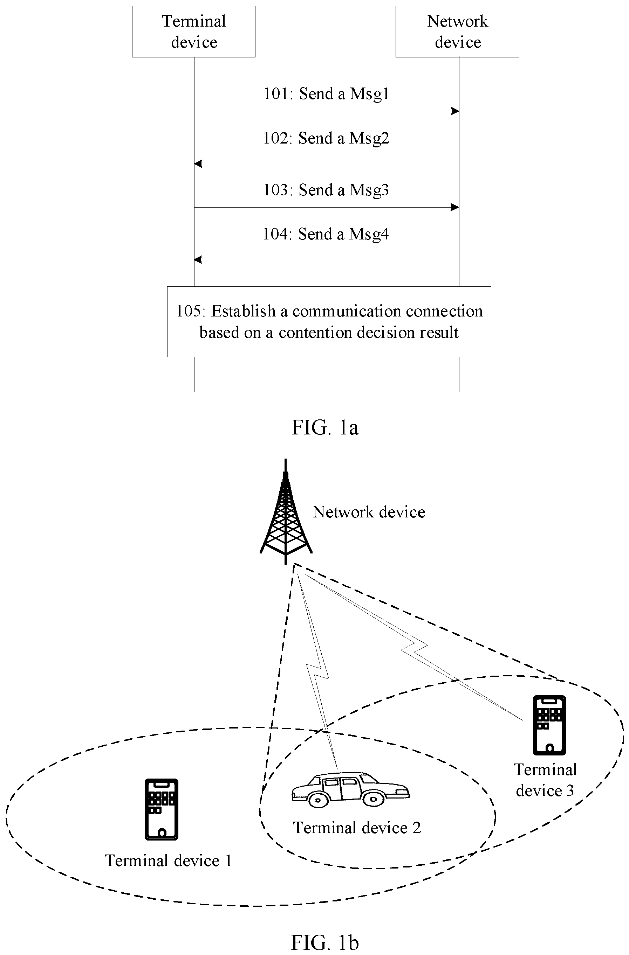

A random access process is a process in which a terminal device establishes an initial communication connection to a network device. As shown in FIG. 1a, the random access process may include the following steps.

Step 101: The terminal device sends a message 1 (message 1, Msg1) to the network device.

The Msg1 may include a random access sequence.

Specifically, the terminal device may send the Msg1 including the random access sequence to the network device through a random access channel.

Step 102: The network device sends a Msg2 to the terminal device.

The Msg2 may include a random access response (random access response, RAR).

Specifically, the network device may send the Msg2 including the RAR to the terminal device through a physical downlink shared channel (physical downlink shared channel, PDSCH).

The Msg2 may include a time-frequency resource corresponding to the Msg3. The network device may send the Msg2 to the terminal device to schedule the Msg3.

It should be noted that, when the network device sends the Msg2 to the terminal device, the time-frequency resource to be allocated to the Msg3 by using the Msg2 is allocated based on one time of transmission. In other words, in an initial transmission process, the terminal device can transmit only one Msg3.

The initial transmission process is a process in which the terminal device sends the Msg3 for a first time.

Step 103: The terminal device sends the Msg3 to the network device.

Specifically, the terminal device may send, through a physical uplink shared channel (physical uplink shared channel, PUSCH), the Msg3 to the network device on the time-frequency resource indicated by the Msg2.

It should be noted that because the time-frequency resource allocated by the network device to the Msg3 by using the Msg2 is allocated based on one time of transmission, the terminal device can transmit only one Msg3 in the initial transmission process.

Step 104: The network device sends a Msg4 to the terminal device.

The Msg4 may include a contention decision result.

Specifically, the network device may determine the contention decision result based on the received Msg3 and a contention mechanism, and send the Msg4 including the contention decision result to the terminal device through the PUSCH.

Step 105: The terminal device establishes a communication connection to the network device based on the contention decision result.

In a non-terrestrial communication network (non-terrestrial network, NTN), a distance between the terminal device and the network device is long, and a loss caused by path propagation is large. When the terminal device transmits one Msg3 in the initial transmission process, because transmit power and an antenna gain of the terminal device are limited, after the network device receives the Msg3 sent by the terminal device, a requirement for successful decoding cannot be met due to a low signal-to-noise ratio (signal-to-noise ratio, SNR) of the Msg3. Consequently, the network device cannot successfully decode the Msg3, and the terminal device fails to perform access. In this case, if the terminal device retransmits one Msg3 to the network device, because the distance between the terminal device and the network device is long, and a transmission delay is large, time for successful access of the terminal device is significantly delayed.

To resolve the foregoing problem, an embodiment of this application provides a communication method applicable to a non-terrestrial communication network NTN. A terminal device may obtain a first quantity N, and send N Msg3 based on the first quantity N in an initial transmission process. The first quantity N indicates a number of repetition of the message 3 Msg3, or the first quantity N indicates a number of aggregation of the message 3 Msg3, and the Msg3 is a message sent by the terminal device through a physical uplink shared channel PUSCH in a random access process. In this embodiment of this application, the terminal device obtains the first quantity N, and may send the N Msg3 based on the first quantity N in the initial transmission process, to improve a success rate of decoding, by a network device, the Msg3 received in the initial transmission process, so that an access success rate of the terminal device is increased, an access delay of the terminal device is reduced, and transmission reliability of a communication system is improved.

Implementations of this embodiment of this application are described in detail below with reference to accompanying drawings in this specification.

The method applicable to a non-terrestrial communication network NTN provided in embodiments of this application may be used in any communication system. The communication system may be a third generation partnership project (third generation partnership project, 3GPP) communication system such as a long term evolution (long term evolution, LTE) system, a fifth generation (fifth generation, 5G) mobile communication system, a new radio (new radio, NR) system, a new radio vehicle to everything (vehicle to everything, NR V2X) system, a system with hybrid networking of LTE and 5G, a device-to-device (device-to-device, D2D) communication system, a machine-to-machine (machine to machine, M2M) communication system, an internet of things (Internet of Things, IoT), another next-generation communication system, or a non-3GPP communication system. This is not limited.

The communication method applicable to a non-terrestrial communication network NTN provided in embodiments of this application may be used in various communication scenarios, for example, may be used in one or more of the following communication scenarios: enhanced mobile broadband (enhanced mobile broadband, eMBB), ultra-reliable and low-latency communication (ultra reliable low latency communication, URLLC), machine-type communication (machine type communication, MTC), massive machine-type communication (massive machine type communications, mMTC), D2D, V2X, and IoT.

The method applicable to a non-terrestrial communication network NTN provided in embodiments of this application may also be used in a long-distance communication scenario, for example, used in a satellite communication scenario in which a distance between the terminal device and the network device is constantly changing, or another long-distance communication scenario. This is not limited.

FIG. 1b is used as an example below to describe a communication method applicable to a non-terrestrial communication network NTN according to an embodiment of this application.

FIG. 1b is a schematic diagram of a communication system according to an embodiment of this application. As shown in FIG. 1b, for example, the communication system is a non-terrestrial communication network (non-terrestrial networks, NTN) communication system. The NTN communication system may include at least one terminal device and at least one network device.

The terminal device in FIG. 1b may be located within a beam/cell coverage range of the network device. The terminal device may perform air interface communication with the network device by using an uplink (uplink, UL) or a downlink (downlink, DL). For example, the terminal device may send uplink data to the network device in a UL direction through a physical uplink shared channel (physical uplink shared channel, PUSCH), and the network device may send downlink data to the terminal device in a DL direction through a physical downlink shared channel (physical downlink shared channel, PDSCH).

The terminal device (terminal) in FIG. 1b may be a terminal device that supports new radio, and may access an NTN system by using an air interface and initiate a service such as calling or internet accessing. The terminal device may also be referred to as user equipment (user equipment, UE), a mobile station (mobile station, MS), a mobile terminal (mobile terminal, MT), or the like. Specifically, the terminal device in FIG. 1b may be a mobile phone (mobile phone), a tablet computer, or a computer with a wireless receiving/transmitting function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, a vehicle with a vehicle-to-vehicle (vehicle-to-vehicle, V2V) communication capability, an intelligent connected vehicle, an unmanned aerial vehicle with a UAV-to-UAV (UAV to UAV, U2U) communication capability, or the like. This is not limited.

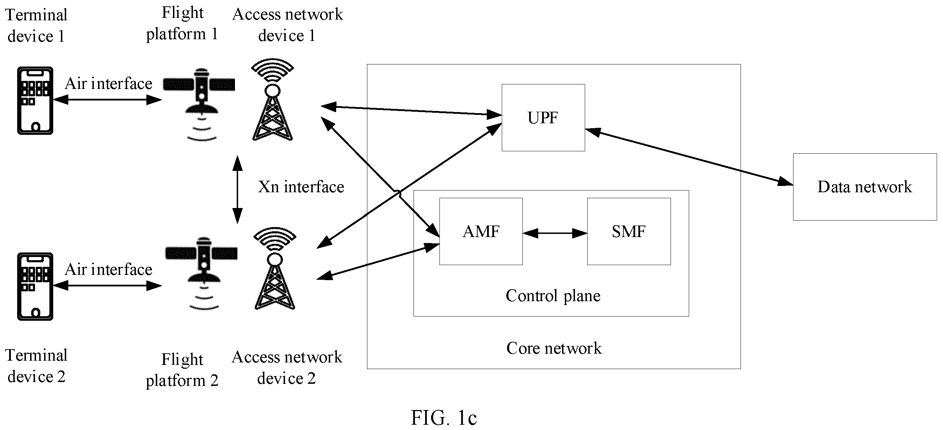

For example, as shown in FIG. 1c, the network device may be an access network device carried on a flight platform. When the access network device is carried on the flight platform, the communication system shown in FIG. 1b may be a communication architecture shown in FIG. 1c. As shown in FIG. 1c, the access network device and the flight platform move synchronously, and the access network device and the flight platform may be considered as a whole. In this case, the flight platform may be considered as the access network device, or this may be described as that the flight platform works in a regenerative (regenerative) mode, that is, the flight platform has a function of the access network device. In addition, a communication link between the flight platform and the terminal device may be referred to as a service link (service link). When the communication system includes a plurality of flight platforms, the flight platforms may communicate with each other through an Xn interface.

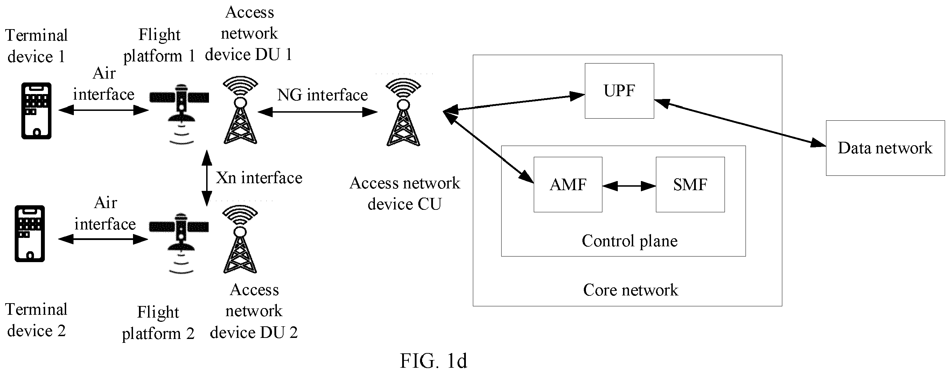

In another example, as shown in FIG. 1d, the network device may be an access network device that is carried on a flight platform in a distributed manner based on a distributed unit (distributed unit, DU). When the access network device is carried on the flight platform in the distributed manner based on the DU, the communication system shown in FIG. 1b may be a communication architecture shown in FIG. 1d. As shown in FIG. 1d, the access network device may include an access network device DU and an access network device aggregation unit (central unit, CU). The access network device DU may be carried on the flight platform, and the access network device CU may be disposed on the ground. The access network device DU may communicate with the access network device CU through a next-generation (next generation, NG) interface, and the terminal device may establish a communication connection to the access network device CU by using the access network device DU. In this case, the flight platform may be considered as a partial access network device, or this may be described as that the flight platform works in a regeneration mode, that is, the flight platform has some functions of the access network device. In addition, when the communication system includes a plurality of flight platforms, the flight platforms may communicate with each other through an Xn interface. A communication link between the flight platform and the terminal device may be referred to as a service link, and a communication link between the flight platform and the access network device CU may be referred to as a feeder link (feeder link). It should be noted that the communication architecture in FIG. 1d may be considered as a special example of the communication architecture shown in FIG. 1c. In FIG. 1d, the access network device CU may also be described as a gateway (gateway) station, a terrestrial station, or the like. This is not limited.

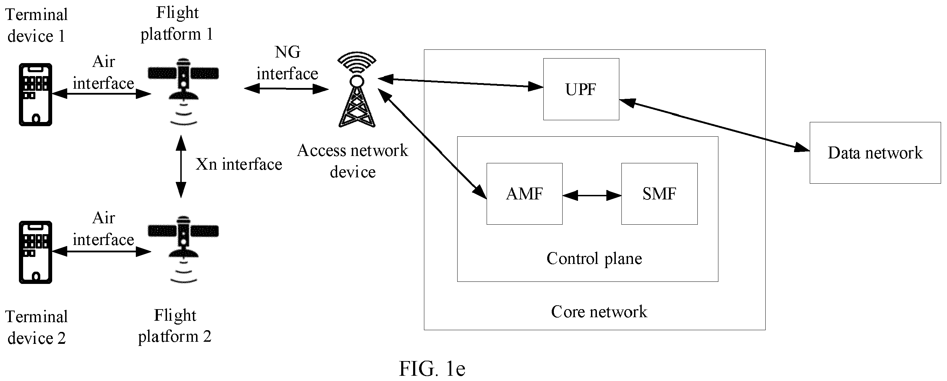

In still another example, as shown in FIG. 1e, the network device may be a flight platform. A communication system shown in FIG. 1e may further include an access network device disposed on the ground. The terminal device and the access network device may communicate with each other by forwarding a signal by using the flight platform. Specifically, the flight platform may communicate with the access network device through an NG interface. The flight platform may provide a transmission/reception point (transmission/reception point, TRP) for wireless access for the terminal device. The TRP may transparently transmit data between the terminal device and the access network device, to implement a communication connection between the terminal device and the access network device. In this case, this may be described as that the flight platform works in a transparent (transparent) mode. In addition, when the communication system includes a plurality of flight platforms, the flight platforms may communicate with each other through an Xn interface. A communication link between the flight platform and the terminal device may be referred to as a service link, and a communication link between the flight platform and the access network device may be referred to as a feeder link. It should be noted that the access network device may also be described as a gateway station, a terrestrial station, or the like. This is not limited.

The access network device may be any device with a wireless receiving/transmitting function, and is mainly configured to implement functions such as a wireless physical control function, resource scheduling and radio resource management, radio access control, and mobility management and provide a reliable wireless transmission protocol, a data encryption protocol, and the like. Specifically, the access network device may be a device supporting wired access, or may be a device supporting wireless access. For example, the access network element may be an access network (access network, AN)/radio access network (radio access network, RAN) device, and includes a plurality of 5G-AN/5G-RAN nodes. The 5G-AN/5G-RAN node may be an access point (access point, AP), a NodeB (NodeB, NB), an enhanced NodeB (enhanced nodeB, eNB), a next-generation NodeB (NR nodeB, gNB), a transmission reception point (transmission reception point, TRP), a transmission point (transmission point, TP), another access node, or the like.

The flight platform may be an aircraft such as a satellite or an unmanned aerial vehicle. For example, the flight platform may include a geostationary orbit satellite, a non-geostationary orbit satellite, a low-orbit satellite, a medium-orbit satellite, a geosynchronous orbit satellite, an unmanned aerial system platform, a high-orbit satellite, or the like. This is not limited.

The low-orbit satellite and the medium-orbit satellite may have their own motion tracks, and generally, a plurality of satellites cooperate to provide communication for a fixed area. The high-orbit satellite is generally in a stationary state, and one or a few high-orbit satellites provide communication for a fixed area.

Compared with terrestrial communication, satellite communication has unique advantages. For example, the satellite communication can provide a wider coverage range, and a satellite is not easily damaged by natural disasters or external force, and can provide a communication service for some areas that cannot be covered by a terrestrial communication network, such as an ocean or a forest, to improve reliability of a communication system, for example, to ensure that an airplane, a train, and a terminal device on such transportation can obtain a better communication service, provide more data transmission resources for the communication system, and improve a network rate. Therefore, a communication system that supports both the ground and the satellite has advantages such as wide coverage, high reliability, multi-connection, and a high throughput.

In addition, in FIG. 1c to FIG. 1e, the communication system may further include a core network device and a data network (data network, DN). The terminal device may communicate with the data network by using the network device and the core network device.

The core network device may be configured to send, to the data network, data of the terminal device that is sent by the network device. The core network device may be configured to implement services such as user access control, mobility management, session management, user security authentication, and charging. The core network device may include a plurality of functional units. For example, the core network device may be classified into a control plane functional entity and a data plane functional entity. The control plane functional entity may include an access and mobility management unit (access and mobility management function, AMF), a session management unit (session management function, SMF), and the like. The data plane functional entity may include a user plane unit (user plane function, UPF) and the like.

The access and mobility management network unit is mainly responsible for work such as access authentication and mobility management of the user equipment, and signaling interaction between functional network elements, for example, managing a registration status of a user, a connection status of the user, user registration and network access, tracking area update, cell switching, user authentication, and key security.

The session management unit may also be referred to as a session management function, a multicast/broadcast service management function (multicast/broadcast-service management function, MB-SMF), a multicast session management network element, or the like. This is not limited. The session management network element is mainly configured to implement a user plane transmission logical channel, for example, a session management function such as establishment, release, and modification of a packet data unit (packet data unit, PDU) session.

The user plane unit may also be referred to as a PDU session anchor (PSF), a user plane function, or a multicast/broadcast user plane function (multicast/broadcast user plane function, MB-UPF). The user plane network element may be used as an anchor on a user plane transmission logical channel, and is mainly configured to complete functions such as routing and forwarding of user plane data. For example, the user plane network element establishes a channel (namely, the user plane transmission logical channel) to the terminal, forwards a data packet between the terminal device and the DN on the channel, and is responsible for data packet filtering, data forwarding, rate control, generation of charging information, and the like for the terminal. A multicast/broadcast (multicast/broadcast, MB) service controller (MB service controller) has service management functions such as group management, security management, and service announcement.

It should be noted that, in addition to the foregoing units, the core network device may further include a policy control unit (policy control function, PCF), an application functional unit (application function, AF), and the like. This is not limited.

The data network may be an operator network that provides a data transmission service for the terminal device, for example, an operator network that may provide an IP multimedia service (IP multi-media service, IMS) for the terminal device. An application server (application server, AS) may be deployed in the DN, and the application server may provide the data transmission service for the terminal device.

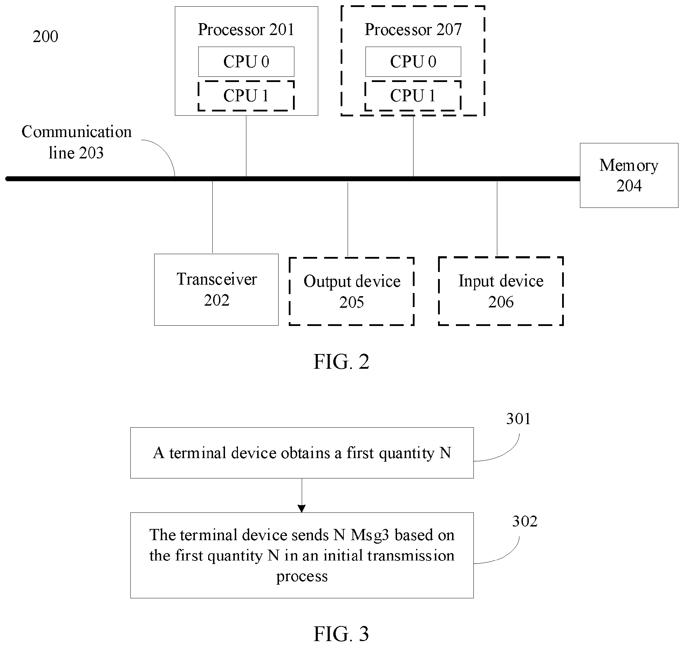

During specific implementation, as shown in FIG. 1b to FIG. 1e, each terminal device and each network device may use a composition structure shown in FIG. 2, or include components shown in FIG. 2. FIG. 2 is a schematic diagram of composition of a communication apparatus 200 according to an embodiment of this application. The communication apparatus 200 may be a terminal device, or a chip or a system-on-a-chip in the terminal device; or may be a network device, or a chip or a system-on-a-chip in the network device. As shown in FIG. 2, the communication apparatus 200 includes a processor 201, a transceiver 202, and a communication line 203.

Further, the communication apparatus 200 may further include a memory 204. The processor 201, the memory 204, and the transceiver 202 may be connected through the communication line 203.

The processor 201 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 201 may be another apparatus with a processing function, for example, a circuit, a component, or a software module. This is not limited.

The transceiver 202 is configured to communicate with another device or another communication network. The another communication network may be an Ethernet, a radio access network (radio access network, RAN), a wireless local area network (wireless local area networks, WLAN), or the like. The transceiver 202 may be a module, a circuit, a transceiver, or any apparatus that can implement communication.

The communication line 203 is configured to transmit information between the components included in the communication apparatus 200.

The memory 204 is configured to store instructions. The instructions may be a computer program.

The memory 204 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray disc, or the like), a magnetic disk storage medium or another magnetic storage device, or the like. This is not limited.

It should be noted that the memory 204 may be independent of the processor 201, or may be integrated with the processor 201. The memory 204 may be configured to store instructions, program code, some data, or the like. The memory 204 may be located inside the communication apparatus 200, or may be located outside the communication apparatus 200. This is not limited. The processor 201 is configured to execute the instructions stored in the memory 204, to implement a communication method applicable to a non-terrestrial communication network NTN provided in the following embodiments of this application.

In an example, the processor 201 may include one or more CPUs, for example, a CPU 0 and a CPU 1 in FIG. 2.

In an optional implementation, the communication apparatus 200 includes a plurality of processors. For example, in addition to the processor 201 in FIG. 2, the communication apparatus 200 may further include a processor 207.

In an optional implementation, the communication apparatus 200 further includes an output device 205 and an input device 206. For example, the input device 206 is a device such as a keyboard, a mouse, a microphone, or a joystick, and the output device 205 is a device such as a display or a speaker (speaker).

It should be noted that the communication apparatus 200 may be a desktop computer, a portable computer, a network server, a mobile phone, a tablet computer, a wireless terminal, an embedded device, a chip system, or a device having a structure similar to a structure in FIG. 2. In addition, the composition structure shown in FIG. 2 does not constitute a limitation on the communication apparatus. In addition to the components shown in FIG. 2, the communication apparatus may include more or fewer components than components shown in the figure, combine some components, or have different component arrangements.

In this embodiment of this application, the chip system may include a chip, or may include a chip and another discrete component.

In addition, for actions, terms, and the like in embodiments of this application, refer to each other. This is not limited. In embodiments of this application, names of messages exchanged between devices, names of parameters in the messages, or the like are merely examples. Another name may alternatively be used during specific implementation. This is not limited.

With reference to the communication systems shown in FIG. 1b to FIG. 1e, a communication method applicable to a non-terrestrial communication network NTN according to an embodiment of this application is described below with reference to FIG. 3. A terminal device may be any terminal device in any communication system in FIG. 1b to FIG. 1e, and a network device may be any network device in any communication system in FIG. 1b to FIG. 1e. The terminal device and the network device described in the following embodiment may have the components shown in FIG. 2.

FIG. 3 is a flowchart of a communication method applicable to a non-terrestrial communication network NTN according to an embodiment of this application. As shown in FIG. 3, the method may include the following steps.

Step 301: A terminal device obtains a first quantity N.

The first quantity N may indicate a number of repetition of the Msg3, or the first quantity N may indicate a number of aggregation of the Msg3, and the Msg3 is a message sent by the terminal device through a physical uplink shared channel PUSCH in a random access process.

For example, the terminal device may obtain the first quantity N in any one of the following manner 1 to manner 6.

Manner 1: The terminal device may determine the first quantity N based on an obtained Msg2.

The Msg2 may be a message received by the terminal device through a PDSCH in the random access process.

Optionally, a network device extends bits of the Msg2, indicates the first quantity N by using some or all of the extended bits, and sends the Msg2 including the first quantity N to the terminal device, so that the terminal device determines the first quantity N based on the received Msg2.

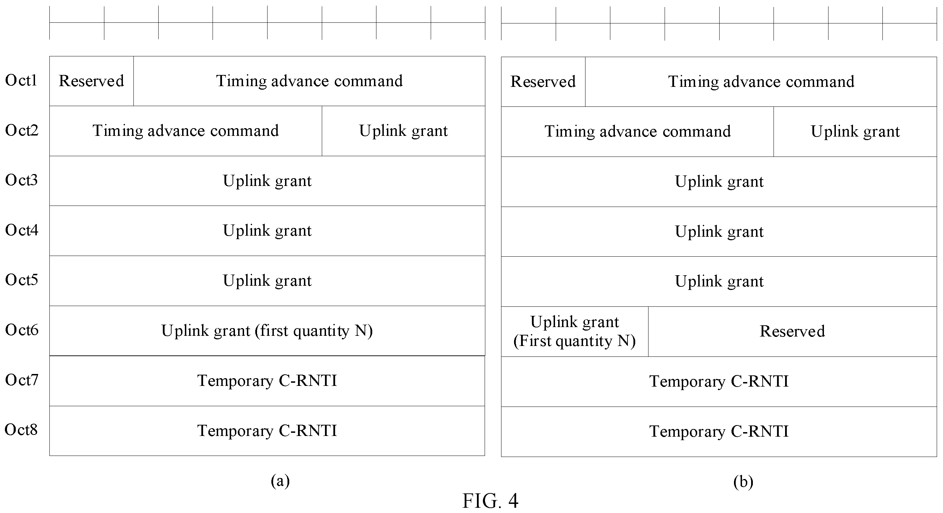

For example, the network device extends bits of the Msg2 by 8 bits. As shown in (a) in FIG. 4, the extended 8 bits may be located in an uplink grant field. The network device may indicate the first quantity N by using all the extended 8 bits, and send a Msg2 shown in (a) in FIG. 4 to the terminal device, so that the terminal device determines the first quantity N based on the bits corresponding to the first quantity N in the received Msg2. For example, the terminal device may determine that the first quantity N is 1 when the bits corresponding to the first quantity N are 00000000, and determine that the first quantity N is 2 when the bits corresponding to the first quantity N are 00000001 . This is not limited.

As shown in (a) in FIG. 4, the Msg2 may include a 1-bit reserved field, a 12-bit timing advance command field, a 35-bit uplink grant field, and a 16-bit cell radio network temporary identifier (cell radio network temporary identifier, C-RNTI) field.

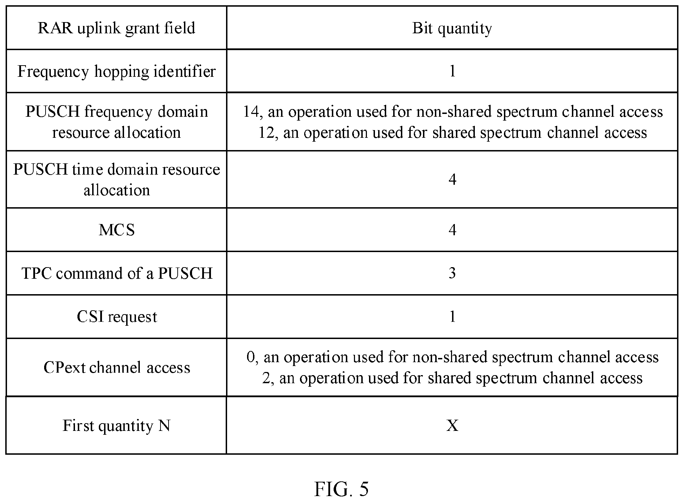

The uplink grant field in the Msg2 may indicate configuration information of the Msg3. As shown in FIG. 5, the uplink grant field may include a 1-bit frequency hopping identifier field, a 14-bit or 12-bit PUSCH frequency domain resource allocation field, a 4-bit PUSCH time domain resource allocation field, a 4-bit modulation and coding scheme (modulation and coding scheme, MCS) field, a 3-bit PUSCH transmit power control (transmit power control, TPC) command field, a 1-bit channel state information (channel state information, CSI) request field, a 0-bit or 2-bit CPext channel access field, and an X-bit first quantity N field, where X is equal to 8.

It should be noted that, for an operation used for non-shared spectrum channel access, the PUSCH frequency domain resource allocation field is 14 bits, and the CPext channel access field is 0 bits; and for an operation used for shared spectrum channel access, the PUSCH frequency domain resource allocation field is 12 bits, and the CPext channel access field is 2 bits.

In another example, the network device extends bits of the Msg2 by 8 bits. The network device may indicate the first quantity N by using some of the extended 8 bits. It is assumed that the network device indicates the first quantity N by using 2 bits in the extended 8 bits. As shown in (b) in FIG. 4, the 2 bits may be located in an uplink grant field in the Msg2, that is, the uplink grant field in the Msg2 is 29 bits, and the other 6 bits in the extended 8 bits may be reserved bits. The network device may send a Msg2 shown in (b) in FIG. 4 to the terminal device, so that the terminal device determines the first quantity N based on the bits corresponding to the first quantity N in the received Msg2. For example, the terminal device may determine that the first quantity N is 1 when the bits corresponding to the first quantity N are 00, determine that the first quantity N is 2 when the bits corresponding to the first quantity N are 01, determine that the first quantity N is 3 when the bits corresponding to the first quantity N are 10, and determine that the first quantity N is 4 when the bits corresponding to the first quantity N are 11. This is not limited.

As shown in (b) in FIG. 4, the Msg2 may include a 1-bit reserved field, a 12-bit timing advance command field, a 29-bit uplink grant field, a 6-bit reserved field, and a 16-bit cell radio network temporary identifier (cell radio network temporary identifier, C-RNTI) field.

The uplink grant field in the Msg2 may indicate configuration information of the Msg3. As shown in FIG. 5, the uplink grant field may include a 1-bit frequency hopping identifier field, a 14-bit or 12-bit PUSCH frequency domain resource allocation field, a 4-bit PUSCH time domain resource allocation field, a 4-bit modulation and coding scheme (modulation and coding scheme, MCS) field, a 3-bit PUSCH transmit power control (transmit power control, TPC) command field, a 1-bit channel state information (channel state information, CSI) request field, a 0-bit or 2-bit CPext channel access field, and an X-bit first quantity N field, where X is equal to 2.

Manner 2: The terminal device determines the first quantity N based on a PUSCH time domain resource allocation field in an obtained Msg2.

The Msg2 is a message received by the terminal device through a PDSCH in the random access process. The PUSCH time domain resource allocation field may include a first index, and the first index indicates a time domain resource occupied by the Msg3.

Optionally, a network device extends bits of the PUSCH time domain resource allocation field in the Msg2, indicates the first quantity N by using a first index corresponding to the extended bits, and sends the Msg2 including the PUSCH time domain resource allocation field to the terminal device, so that the terminal device determines the first quantity N based on the first index included in the PUSCH time domain resource allocation field in the received Msg2.

For example, the terminal device may determine the first quantity N based on a first correspondence and the first index.

The first correspondence includes a correspondence between the first index and the first quantity N. The first correspondence may be pre-specified in a communication protocol, or may be pre-configured by the network device for the terminal device by using signaling such as RRC signaling, MAC CE signaling, or DCI signaling. This is not limited.

For example, as shown in the following Table 1, the network device may extend the bits of the PUSCH time domain resource allocation field from 4 bits to 5 bits; in other words, the first index of the PUSCH time domain resource allocation field is extended from 1 to 16 to 1 to 32. It is assumed that it is preset in the first correspondence that a first quantity N corresponding to first indexes 1 to 16 is 1, a first quantity N corresponding to a first index 17 is 2, and a first quantity N corresponding to a first index 18 is 3. When the first index received by the terminal device is 17, the terminal device may determine, based on the first correspondence and the first index 17, that the first quantity N is 2.

In the following Table 1, Kz may indicate a slot location of a first Msg3 in N Msg3 relative to RAR signaling, S may indicate a symbol start point of the first Msg3 in this slot, and L may indicate a quantity of symbols occupied by the first Msg3; or Kz may indicate a slot location of a first Msg3 in N Msg3 relative to RAR signaling, S may indicate a symbol start point of the first Msg3 in this slot, and L may indicate a quantity of symbols occupied by the N Msg3.

**Table 1**

| First index | PUSCH mapping type | K₂ | S | L |
|---|---|---|---|---|
| 1 | Type A | j | 0 | 14 |
| 2 | Type A | j | 0 | 12 |
| 3 | Type A | j | 0 | 10 |
| 4 | Type B | j | 2 | 10 |
| 5 | Type B | j | 4 | 10 |
| 6 | Type B | j | 4 | 8 |
| 7 | Type B | j | 4 | 6 |
| 8 | Type A | j+1 | 0 | 14 |
| 9 | Type A | j+1 | 0 | 12 |
| 10 | Type A | j+1 | 0 | 10 |
| 11 | Type A | j+2 | 0 | 14 |
| 12 | Type A | j+2 | 0 | 12 |
| 13 | Type A | j+2 | 0 | 10 |
| 14 | Type B | j | 8 | 6 |
| 15 | Type A | j+3 | 0 | 14 |
| 16 | Type A | j+3 | 0 | 10 |
| 17 | Type A | j | 0 | 20 |
| 18 | Type A | j | 0 | 24 |
| 19 | Type A | j+1 | 0 | 20 |
| 20 | Type A | j+1 | 0 | 24 |
| 21 | Type A | j+2 | 0 | 20 |
| 22 | Type A | j+2 | 0 | 24 |
| 23 | Type B | j | 2 | 20 |
| 24 | Type B | j | 4 | 24 |
| 25 | Type B | j | 4 | 20 |
| 26 | Type B | j | 8 | 24 |
| ... | | | | |

Manner 3: The terminal device determines the first quantity N based on a PUSCH frequency domain resource allocation field in an obtained Msg2.

The Msg2 is a message received by the terminal device through a PDSCH in the random access process. The PUSCH frequency domain resource allocation field may indicate locations of frequency domain resource blocks occupied by N Msg3, or the PUSCH frequency domain resource allocation field may indicate start locations of frequency domain resource blocks corresponding to N Msg3 and lengths of the frequency domain resource blocks.

For example, when the PUSCH frequency domain resource allocation field indicates the locations of the frequency domain resource blocks occupied by the N Msg3, the terminal device may determine the first quantity N based on the locations of the frequency domain resource blocks occupied by the N Msg3.

For example, one Msg3 occupies one frequency domain resource block. The terminal device may determine that the first quantity N is 5 when bits corresponding to the received PUSCH frequency domain resource allocation field are 101000101100.

In another example, when the PUSCH frequency domain resource allocation field indicates the start locations of the frequency domain resource blocks corresponding to the N Msg3 and the lengths of the frequency domain resource blocks, the terminal device may determine the first quantity N based on N start locations.

For example, one Msg3 occupies two frequency domain resource blocks. When bits corresponding to the received PUSCH frequency domain resource allocation field are 101010100000, the terminal device may determine that the start locations of the frequency domain resource blocks corresponding to the Msg3 are separately a zeroth frequency domain resource block, a second frequency domain resource block, a fourth frequency domain resource block, and a sixth frequency domain resource block, and determine that the first quantity N is 4.

Manner 4: The terminal device determines the first quantity N based on obtained location information of a network device.

For example, the terminal device may determine the first quantity N based on a second correspondence and the location information of the network device.

The second correspondence includes a correspondence between the location information of the network device and the first quantity N. The second correspondence may be pre-specified in a communication protocol, or may be pre-configured by the network device for or broadcast by the network device to the terminal device by using signaling such as RRC signaling, MAC CE signaling, or DCI signaling. This is not limited.

The location information of the network device may include one or more of a height of the network device, longitude and latitude of the network device, a distance between the network device and the terminal device, and an elevation angle between the network device and the terminal device. This is not limited.

In addition, the terminal device may further receive a type of the network device that is sent by the network device, or receive some common parameters such as a common timing advance or common frequency compensation that are indicated by the network device by using a system message. The terminal device may further receive indication information that is sent by the network device and that indicates the terminal device to determine the first quantity N based on the location information of the network device.

For example, the location information of the network device is the elevation angle between the network device and the terminal device. It is assumed that the second correspondence is shown in the following Table 2. The terminal device may determine the first quantity N based on the second correspondence and a received elevation angle of the network device.

**Table 2**

| Type of a network device | Elevation angle | First quantity N |
|---|---|---|
| LEO600 | <30 degrees | 2 |
| LEO600 | ≥30 degrees | 1 |
| LEO1200 | <30 degrees | 4 |
| LEO1200 | ≥30 degrees and <50 degrees | 3 |
| LEO1200 | ≥50 degrees | 2 |
| GEO | <30 degrees | 8 |
| GEO | ≥30 degrees and <50 degrees | 4 |
| GEO | ≥50 degrees | 3 |

It should be noted that only a same type of network device may use same N or different N. When different N is used, a smaller elevation angle between the network device and the terminal device may indicate a larger first quantity N, so that a success rate of decoding the received Msg3 by the network device is increased, an access success rate of the terminal device is increased, an access delay of the terminal device is reduced, and transmission reliability of a communication system is improved.

Similarly, for a same type of network device, a longer distance between the network device and the terminal device may indicate a larger first quantity N.

Manner 5: The terminal device determines the first quantity N based on an obtained system message.

The system message includes the first quantity N.

For example, a network device may configure a corresponding cell-level or beam-level common parameter in the system message such as a system information block 1 (system information block 1, SIB1). For example, the network device may set Number Of Repetition-Msg3 = 2, 3, 4, 5, ..., Number Of Aggregation-Msg3 = 2, 3, 4, 5, ..., or the like to indicate the first quantity N.

Number Of Repetition-Msg3 may indicate the number of repetition of the Msg3, and Number OfAggregation-Msg3 may indicate the number of aggregation of the Msg3.

In addition, the terminal device may further receive a type of the network device that is sent by the network device, or receive some common parameters such as a common timing advance or common frequency compensation that are indicated by the network device by using the system message. The terminal device may further receive indication information that is sent by the network device and that indicates the terminal device to determine the first quantity N based on the system message.

Manner 6: The terminal device determines the first quantity N based on an obtained signal of a network device.

The signal of the network device may be any downlink signal sent by the network device to the terminal device, or may be a broadcast signal sent by the network device. This is not limited.

For example, the terminal device may determine the first quantity N based on a third correspondence and signal strength of the signal.

The third correspondence may include a correspondence between the signal strength and the first quantity N. The third correspondence may be pre-specified in a communication protocol, or may be pre-configured by the network device for the terminal device by using signaling such as RRC signaling, MAC CE signaling, or DCI signaling. This is not limited.

The signal strength of the signal may be determined based on a parameter that can be used to measure the signal strength, such as reference signal received quality (reference signal received quality, RSRQ) or reference signal received power (reference signal received power, RSRP). This is not limited.

For example, the third correspondence is a correspondence shown in the following Table 3. The terminal device may determine the first quantity N based on the third correspondence and the strength of the received signal of the network device.

**Table 3**

| Signal strength | First quantity N |
|---|---|
| Greater than a third threshold | 1 |
| Greater than a second threshold and less than a third threshold | 2 |
| Greater than a first threshold and less than a second threshold | 3 |
| Less than a first threshold | 4 |

It should be noted that, weaker signal strength of the signal of the network device that is received by the terminal device may indicate a larger first quantity N, so that a success rate of decoding the received Msg3 by the network device is increased, an access success rate of the terminal device is increased, an access delay of the terminal device is reduced, and transmission reliability of a communication system is improved.

In addition, the terminal device may further receive a type of the network device that is sent by the network device, or receive some common parameters such as a common timing advance or common frequency compensation that are indicated by the network device by using a system message. The terminal device may further receive indication information that is sent by the network device and that indicates the terminal device to determine the first quantity N based on the signal of the network device.

Further, after the terminal device obtains the first quantity N, if the first quantity N indicates the number of repetition of the Msg3, the terminal device may repeat the Msg3 for N times. If the first quantity N indicates the number of aggregation of the Msg3, the terminal device may determine Msg3 of N coding redundancy versions based on the number of aggregation.

Optionally, the terminal device determines, based on the number N of aggregation and from a preset correspondence between a number of aggregation and a coding redundancy version, the N coding redundancy versions corresponding to the number N of aggregation.

For example, a correspondence between a number of aggregation and a coding redundancy version is shown in the following Table 4. When the number of aggregation is 2, the terminal device may determine, based on the following Table 4, a Msg3 whose coding redundancy version is 0 and a Msg3 whose coding redundancy version is 2.

**Table 4**

| Number of aggregation | Coding redundancy version |
|---|---|
| 1 | 0 |
| 2 | 0, 2 |
| 3 | 0, 2, 3 |
| 4 | 0, 1, 2, 3 |

It should be noted that the preset correspondence between a number of aggregation and a coding redundancy version may be pre-specified in a communication protocol, or may be pre-configured by the network device for the terminal device by using signaling such as RRC signaling, MAC CE signaling, or DCI signaling. This is not limited.

Alternatively, the terminal device independently determines Msg3 of N coding redundancy versions based on the number N of aggregation.

For example, the coding redundancy versions corresponding to the Msg3 include 0, 1, 2, and 3. It is assumed that the number N of aggregation obtained by the terminal device is 2, the terminal device may randomly select Msg3 of two coding redundancy versions from the coding redundancy versions of the Msg3.

Optionally, the terminal device obtains first identification information.

The first identification information may indicate that the first quantity N indicates the number of repetition of the Msg3, or the first identification information indicates that the first quantity N indicates the number of aggregation of the Msg3.

Specifically, the terminal device may determine, based on the first identification information, whether the first quantity N indicates the number of repetition of the Msg3 or the number of aggregation of the Msg3. If the first identification information indicates the number of repetition of the Msg3, the terminal device may repeat the Msg3 for N times based on the first quantity N. If the first identification information indicates the number of aggregation of the Msg3, the terminal device may determine the Msg3 of the N coding redundancy versions based on the first quantity N.

For example, the first identification information is 1 bit. The network device may set the 1 bit to 0 to indicate that the first quantity N indicates the number of repetition of the Msg3, and set the 1 bit to 1 to indicate that the first quantity N indicates the number of aggregation of the Msg3. Alternatively, the network device may set the 1 bit to 1 to indicate that the first quantity N indicates the number of repetition of the Msg3, and set the 1 bit to 0 to indicate that the first quantity N indicates the number of aggregation of the Msg3. This is not limited.

Optionally, the first identification information is located in the message 2 Msg2.

The network device may extend bits of the Msg2, indicate the first identification information by using some or all of the extended bits, and send the Msg2 including the first identification information to the terminal device, so that the terminal device determines the first identification information based on the received Msg2.

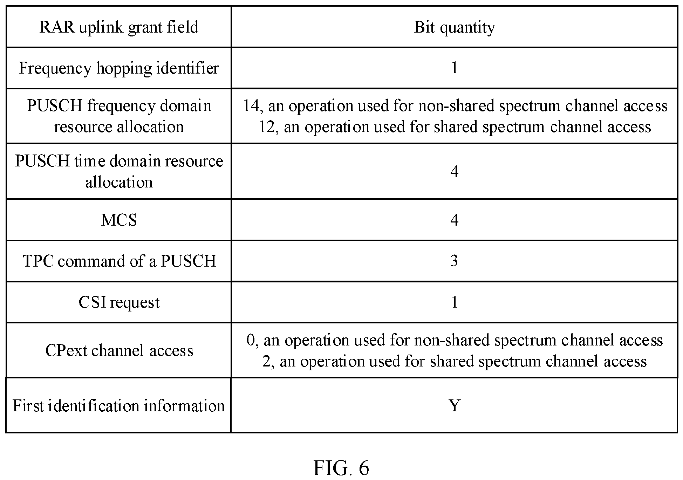

For example, the network device extends the bits of the Msg2 to a plurality of bits, and indicates the first identification information by using Y bits in the plurality of extended bits. As shown in FIG. 6, the Y bits may be located in an uplink grant field. The network device may send the Msg2 including the uplink grant field shown in FIG. 6 to the terminal device, so that the terminal device determines the first identification information based on the received Msg2.

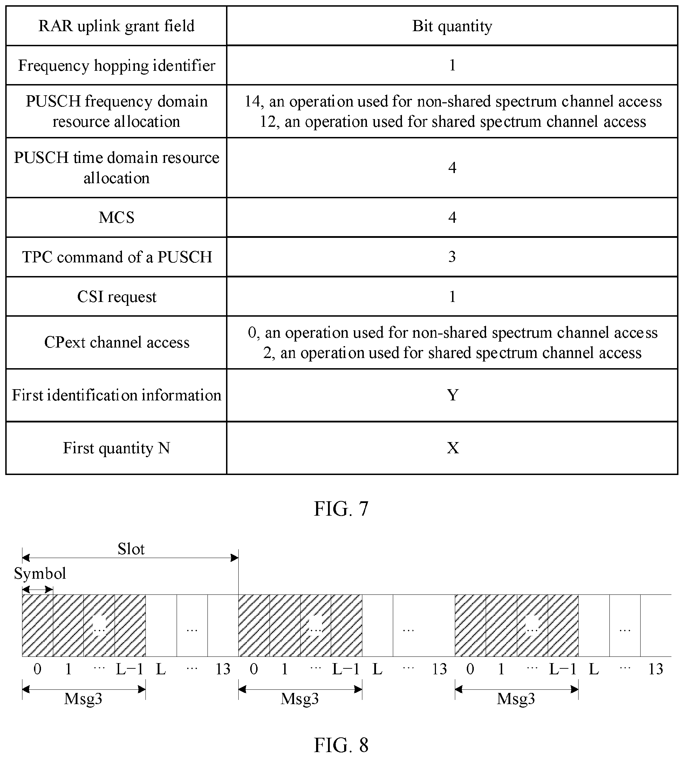

It should be noted that, when the network device indicates the first quantity N in the manner described in the manner 1, as shown in FIG. 7, the network device may extend the bits of the uplink grant field in the Msg2 to a plurality of bits, so that the uplink grant field may include both the first quantity N and the first identification information. When the network device indicates the first quantity N in the manners described in the manner 2 to the manner 6, the network device may indicate the first identification information to the terminal device by using the uplink grant field shown in FIG. 6.

Alternatively, the first identification information is located in radio resource control RRC signaling, media access control control element MAC CE signaling, or downlink control information DCI signaling. This is not limited.

Alternatively, the network device may indicate the first identification information to the terminal device in a broadcast or multicast manner.

Alternatively, different from the foregoing manner of using the first identification information, the network device may extend the bits of the Msg2 based on the method described in the manner 1, and indicate the first quantity N by using some or all of the extended bits. When the first quantity N is less than or equal to a preset threshold, it is determined that the first quantity N indicates the number of repetition of the Msg3. When the first quantity N is greater than the preset threshold, it is determined that the first quantity N indicates the number of aggregation of the Msg3.

For example, the network device indicates the first quantity N by using 2 bits. It is assumed that the preset threshold is 2. When the first quantity N is 1 or 2, the terminal device may determine that the first quantity N indicates the number of repetition of the Msg3; and when the first quantity is 3 or 4, the terminal device may determine that the first quantity N indicates the number of aggregation of the Msg3.

It should be noted that the preset threshold may be pre-specified in a communication protocol, or may be pre-configured by the network device for the terminal device. This is not limited.

Alternatively, different from the foregoing determining, by using the first identification information or the preset threshold, whether the first quantity N indicates the number of repetition of the Msg3 or the number of aggregation of the Msg3, whether the first quantity N indicates the number of repetition of the Msg3 or the number of aggregation of the Msg3 may be pre-specified in a communication protocol, or may be pre-negotiated by the terminal device and the network device. This is not limited.

Step 302: The terminal device sends N Msg3 based on the first quantity N in an initial transmission process.

Based on step 301, the terminal device may determine the N Msg3 based on the first quantity N, and send the N Msg3 to the network device based on time-frequency resources corresponding to the N Msg3 in the initial transmission process.

The initial transmission process is a process in which the terminal device sends the Msg3 for a first time.

In a possible design, the terminal device determines, based on obtained first indication information, time domain resources corresponding to the N Msg3.

The first indication information indicates a time domain resource occupied by a first Msg3 in the N Msg3.

For example, as shown in FIG. 8, the terminal device may determine, based on the first indication information, a start orthogonal frequency division multiplexing OFDM symbol of a K^{th} Msg3 as a start OFDM symbol of a next slot of a slot in which a last OFDM symbol occupied by a (K-1)^{th} Msg3 is located, where K is less than or equal to N.

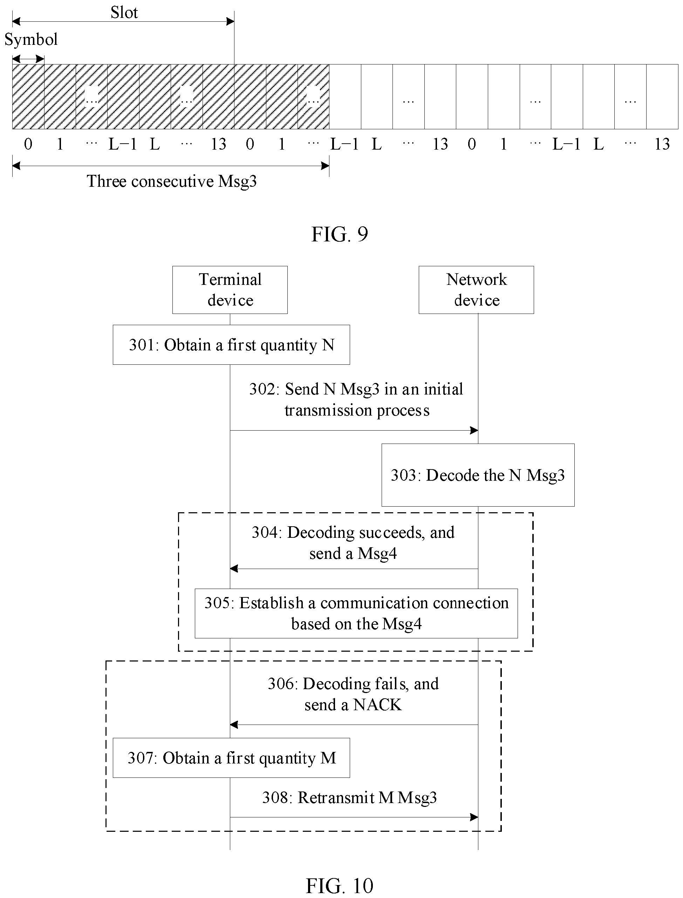

In another example, as shown in FIG. 9, the terminal device may determine, based on the first indication information, a start OFDM symbol of a K^{th} Msg3 as a next OFDM symbol of a last OFDM symbol occupied by a (K-1)^{th} Msg3, where K is less than or equal to N.

Optionally, the first indication information is the PUSCH time domain resource allocation field in the Msg2.

The PUSCH time domain resource allocation field may include a first index, and the first index may indicate, by using a correspondence with a PUSCH mapping type, K₂, S, and L, a time domain resource occupied by the Msg3.

For example, the first index may be 1 to 16 shown in Table 5. K₂ may indicate a slot location of the first Msg3 in the N Msg3 relative to RAR signaling, S may indicate a symbol start point of the first Msg3 in this slot, and L may indicate a quantity of symbols occupied by the first Msg3. The terminal device may determine a time domain resource of the first Msg3 based on the first index, and determine a time domain resource of a second Msg3, ..., or an N^{th} Msg3 based on the time domain resource of the first Msg3 by using a method shown in FIG. 8 or FIG. 9.

**Table 5**

| First index | PUSCH mapping type | K₂ | S | L |
|---|---|---|---|---|
| 1 | Type A | j | 0 | 14 |
| 2 | Type A | j | 0 | 12 |
| 3 | Type A | j | 0 | 10 |
| 4 | Type B | j | 2 | 10 |
| 5 | Type B | j | 4 | 10 |
| 6 | Type B | j | 4 | 8 |
| 7 | Type B | j | 4 | 6 |
| 8 | Type A | j+1 | 0 | 14 |
| 9 | Type A | j+1 | 0 | 12 |
| 10 | Type A | j+1 | 0 | 10 |
| 11 | Type A | j+2 | 0 | 14 |
| 12 | Type A | j+2 | 0 | 12 |
| 13 | Type A | j+2 | 0 | 10 |
| 14 | Type B | j | 8 | 6 |
| 15 | Type A | j+3 | 0 | 14 |
| 16 | Type A | j+3 | 0 | 10 |

In another example, the first index may alternatively be 1 to 32 shown in Table 1. K₂ may indicate a slot location of the first Msg3 in the N Msg3 relative to RAR signaling, S may indicate a symbol start point of the first Msg3 in this slot, and L may indicate a quantity of symbols occupied by the N Msg3. The terminal device may determine, based on the first index, the slot location of the first Msg3 relative to the RAR signaling and the symbol start point of the first Msg3 in this slot, and determine, based on the first quantity N and L, a quantity of symbols occupied by each Msg3, to determine a time domain resource of the first Msg3, and determine a time domain resource of a second Msg3, ..., or an N^{th} Msg3 based on the time domain resource of the first Msg3 by using a method shown in FIG. 8 or FIG. 9.

It should be noted that in the foregoing two examples, the terminal device may determine, based on K₂ corresponding to the first index, n+K₂+Δ as a slot interval between a slot n in which an RAR is received and a slot in which the Msg3 is sent. A value j of K₂ and Δ are related to a subcarrier spacing.

Alternatively, the terminal device receives RRC signaling that is sent by the network device and that includes the first indication information, and determines the first indication information based on the RRC signaling.

It should be noted that the network device may alternatively directly configure a time domain resource of the first Msg3 by using a cell-level or beam-level broadcast message, so that the terminal device determines a time domain resource of a second Msg3, ..., or an N^{th} Msg3 based on a method shown in FIG. 8 or FIG. 9. Alternatively, the network device may directly configure time domain resources of the N Msg3 by using a cell-level or beam-level broadcast message. This is not limited.

In another possible design, the terminal device determines, based on obtained second indication information, frequency domain resources corresponding to the N Msg3.

The second indication information may indicate the frequency domain resource occupied by each of the N Msg3.

Optionally, the second indication information is the PUSCH frequency domain resource allocation field in the Msg2.

For example, the PUSCH frequency domain resource allocation field may indicate, in a bitmap manner, the location of the frequency domain resource block occupied by each Msg3.

For example, the PUSCH frequency domain resource allocation field is 12 bits. The network device may set the PUSCH frequency domain resource allocation field to 100001100001, to indicate that frequency domain resource blocks occupied by the N Msg3 include first, sixth, seventh, and twelfth frequency domain resource blocks.

It should be noted that when the first quantity N does not match a quantity of frequency domain resource blocks indicated by the network device, the terminal device may place the N Msg3 on the frequency domain resource blocks indicated by the network device.

For example, if the first quantity N determined by the terminal device is 4, and the PUSCH frequency domain resource allocation field indicated by the network device is 100001101001, the terminal device may place four Msg3 on first, sixth, seventh, ninth, and twelfth frequency domain resource blocks.

For another example, the PUSCH frequency domain resource allocation field is 12 bits. The network device may set the PUSCH frequency domain resource allocation field to 100001000000, to indicate that a frequency domain resource block occupied by one Msg3 includes first and sixth frequency domain resource blocks. The terminal device may determine, based on the received PUSCH frequency domain resource allocation field, that each Msg3 occupies two frequency domain resource blocks. When the terminal device determines that the first quantity is N, the terminal device may select (N-1)*2 frequency domain resource blocks from unoccupied frequency domain resource blocks in a front-to-back sequence, a back-to-front sequence, or randomly, and determine the selected frequency domain resource blocks as frequency domain resource blocks occupied by remaining (N-1) Msg3.

In still another example, the PUSCH frequency domain resource allocation field may indicate a start location of a frequency domain resource block corresponding to each Msg3 and a length of the frequency domain resource block.

For example, the PUSCH frequency domain resource allocation field is 12 bits. The network device may set the PUSCH frequency domain resource allocation field to 110000000000, to indicate that the start location of the first Msg3 is a first frequency domain resource block, and the first Msg3 occupies two frequency domain resource blocks. After the terminal device receives the PUSCH frequency domain resource allocation field, when the terminal device determines that the first quantity is N, the terminal device may select (N-1)^{∗}2 frequency domain resource blocks starting from a next frequency domain resource block of a last frequency domain resource block occupied by the first Msg3, and determine the selected frequency domain resource blocks as frequency domain resource blocks occupied by remaining (N-1) Msg3.

For another example, the PUSCH frequency domain resource allocation field is 12 bits. The network device may set the PUSCH frequency domain resource allocation field to 101010100000, to indicate that start locations of the N Msg3 are sequentially a first frequency domain resource block, a third frequency domain resource block, a fifth frequency domain resource block, and a seventh frequency domain resource block, and each Msg3 occupies two frequency domain resource blocks.

In still another example, the PUSCH frequency domain resource allocation field may indicate a configuration rule of a location of a frequency domain resource block corresponding to each Msg3.

For example, the PUSCH frequency domain resource allocation field is 12 bits. The network device may set the PUSCH frequency domain resource allocation field to 101000000000, to indicate that the configuration rule of the location of the frequency domain resource block corresponding to each Msg3 is 1010. The terminal device may determine, according to the configuration rule, that the locations of the frequency domain resource blocks corresponding to the N Msg3 are 101010101010.

Alternatively, the terminal device receives RRC signaling that is sent by the network device and that includes the second indication information, and determines the second indication information based on the RRC signaling.

It should be noted that the network device may alternatively directly configure the frequency domain resources of the N Msg3 by using a cell-level or beam-level broadcast message. This is not limited.

Based on the foregoing two possible designs, the RRC signaling (including a broadcast message) is transmitted on a data channel, and time-frequency resources are abundant. The network device indicates time-frequency resources corresponding to all or some Msg3 by using the RRC signaling, to effectively support various transmission manners.

It should be noted that the foregoing two possible designs may be used separately, or may be used in combination. This is not limited.

For example, when the first quantity N is less than or equal to a preset threshold, the network device and the terminal device may determine, in a time domain extension manner or a frequency domain extension manner, time-frequency resources corresponding to the N Msg3. When the first quantity N is greater than the preset threshold, the network device and the terminal device may use a combination of time domain extension and frequency domain extension, to reduce a transmission delay of the Msg3 and improve transmission reliability of a communication system.

Optionally, the terminal device receives second identification information from the network device.

The second identification information indicates the terminal device to send the N Msg3 in the time domain extension manner; the second identification information indicates the terminal device to send the N Msg3 in the frequency domain extension manner; or the second identification information indicates the terminal device to send the N Msg3 in a time domain extension and frequency domain extension manner

For example, the second identification information is 2 bits. The network device may set the 2 bits to 00, to indicate the terminal device to send the N Msg3 in the time domain extension manner; set the 2 bits to 01, to indicate the terminal device to send the N Msg3 in the frequency domain extension manner; and set the 2 bits to 10, to indicate the terminal device to send the N Msg3 in the time domain extension and frequency domain extension manner.

Optionally, the network device adds the second identification information to a broadcast message in a broadcast manner, and sends the broadcast message to the terminal device.

Based on step 302, the terminal device may determine the N Msg3 based on the first quantity N, and send the N Msg3 to the network device based on the time-frequency resources of the N Msg3 in the initial transmission process.

Based on the method shown in FIG. 3, the terminal device obtains the first quantity N, and may send the N Msg3 based on the first quantity N in the initial transmission process. This increases a success rate of decoding, by the network device, the Msg3 received in the initial transmission process, so that an access success rate of the terminal device is increased, an access delay of the terminal device is reduced, and transmission reliability of a communication system is improved.

Based on the method shown in FIG. 3, as shown in FIG. 10, after the terminal device sends the N Msg3 based on the first quantity N in the initial transmission process, the method may further include the following steps.

Step 303: The network device decodes the N Msg3, and if the decoding succeeds, performs the following step 304 and step 305, or otherwise, performs the following step 306 to step 308.

Step 304: The network device sends a Msg4 to the terminal device.

Step 305: The terminal device establishes a communication connection to the network device based on the Msg4.

For specific descriptions of step 304 and step 305, refer to the descriptions of step 104 and step 105 in FIG. 1a. Details are not described again.

Step 306: The network device sends a negative acknowledgment NACK to the terminal device.

Step 307: The terminal device obtains a first quantity M.

The first quantity M may be the same as or different from the first quantity N. This is not limited.

For example, similar to step 301 in which the terminal device obtains the first quantity N, the terminal device may determine the first quantity M in any one of the manner 4 to the manner 6.

For example, the terminal device obtains the first quantity M in the manner 5. The network device may configure a corresponding cell-level or beam-level common parameter in a system message such as a system information block 1 (system information block 1, SIB1). For example, the network device may set Number Of Repetition-Msg3 = 2, 3, 4, 5, ..., Number Of Aggregation-Msg3 = 2, 3, 4, 5, ..., or the like to indicate the first quantity M.

It should be noted that the network device may alternatively indicate both the first quantity N and the first quantity M in the system message. When performing initial transmission, the terminal device performs initial transmission based on the first quantity N. When the terminal device needs to perform retransmission, the terminal device performs retransmission based on the first quantity M. This is not limited.

Step 308: The terminal device retransmits M Msg3 to the network device based on the first quantity M.

For descriptions of step 307 and step 308, refer to the descriptions of step 301 and step 302. Details are not described again.

It should be noted that step 307 and step 308 may alternatively not be performed based on step 301 and step 302. To be specific, the terminal device may transmit one Msg3 in the initial transmission process, and retransmit the M Msg3 to the network device based on the first quantity M in a retransmission process.

Alternatively, the terminal device may not need to transmit the N Msg3 in the initial transmission process.

Based on the method shown in FIG. 10, after the terminal device receives the NACK sent by the network device, the terminal device may obtain the first quantity M, and send the M Msg3 based on the first quantity M in the retransmission process. This increases a success rate of decoding, by the network device, the Msg3 received in the retransmission process, so that an access success rate of the terminal device is increased, an access delay of the terminal device is reduced, and transmission reliability of a communication system is improved.

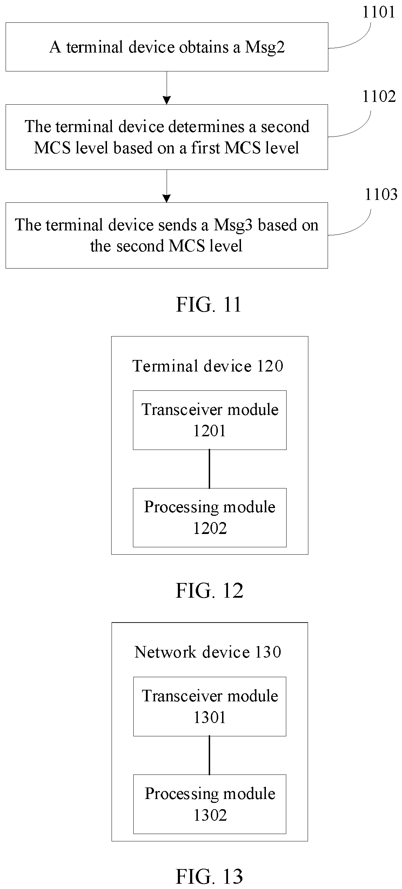

Further, based on the method shown in FIG. 3 or FIG. 10, as shown in FIG. 11, when the terminal device sends the Msg3 to the network device in the initial transmission process or the retransmission process, the terminal device may reduce an MCS level, to improve a success rate of decoding, by the network device, the Msg3 received in the initial transmission process, so that an access success rate of the terminal device is increased, an access delay of the terminal device is reduced, and transmission reliability of a communication system is improved. Specifically, the method may include the following steps.

Step 1101: The terminal device obtains an Msg2.

The Msg2 includes a first MCS level.

Step 1102: The terminal device determines a second MCS level based on the first MCS level.

The second MCS level is less than the first MCS level.

For example, the terminal device may obtain a preset quantity of levels, and determine a difference between the first MCS level and the preset quantity of levels as the second MCS level.

For example, if bits corresponding to an MCS field in the Msg2 are 1111, the terminal device may determine that the first MCS level is 16. It is assumed that the preset quantity of levels is 4. In this case, the terminal device may determine that the second MCS level is 16 - 4 = 12.

For example, the terminal device may receive a preset quantity of levels sent by the network device.

In another example, the terminal device may obtain location information of the network device, and determine the preset quantity of levels based on the location information of the network device.

The terminal device may determine the preset quantity of levels based on a fourth correspondence and the location information of the network device.

The fourth correspondence includes a correspondence between the location information of the network device and the preset quantity of levels. The fourth correspondence may be pre-specified in a communication protocol, or may be pre-configured by the network device for the terminal device by using signaling such as RRC signaling, MAC CE signaling, or DCI signaling. This is not limited.

The location information of the network device may include one or more of a height of the network device, longitude and latitude of the network device, a distance between the network device and the terminal device, and an elevation angle between the network device and the terminal device. This is not limited.

For example, the location information of the network device is the elevation angle between the network device and the terminal device. It is assumed that the fourth correspondence is shown in the following Table 6. The terminal device may determine the preset quantity of levels based on the fourth correspondence and a received elevation angle of the network device.

**Table 6**

| Type of a network device | Elevation angle | Preset quantity of levels |
|---|---|---|
| LEO600 | <30 degrees | 2 |
| LEO600 | ≥30 degrees | 1 |
| LEO1200 | <30 degrees | 4 |
| LEO1200 | ≥30 degrees and <50 degrees | 3 |
| LEO1200 | ≥50 degrees | 2 |
| GEO | <30 degrees | 8 |
| GEO | ≥30 degrees and <50 degrees | 4 |
| GEO | ≥50 degrees | 3 |

It should be noted that, for a same type of network device, a smaller elevation angle between the network device and the terminal device may indicate a larger preset quantity of levels, so that a success rate of decoding the received Msg3 by the network device is increased, an access success rate of the terminal device is increased, an access delay of the terminal device is reduced, and transmission reliability of a communication system is improved.

Similarly, for a same type of network device, a longer distance between the network device and the terminal device may indicate a larger preset quantity of levels.

In still another example, the terminal device may receive a signal sent by the network device, and determine the preset quantity of levels based on signal strength of the signal.

The signal of the network device may be any downlink signal sent by the network device to the terminal device, or may be a broadcast signal sent by the network device. This is not limited.

For example, the terminal device may determine the preset quantity of levels based on a fifth correspondence and the signal strength of the signal.

The fifth correspondence may include a correspondence between the signal strength and the preset quantity of levels. The fifth correspondence may be pre-specified in a communication protocol, or may be pre-configured by the network device for the terminal device by using signaling such as RRC signaling, MAC CE signaling, or DCI signaling. This is not limited.

The signal strength of the signal may be determined based on a parameter that can be used to measure the signal strength, such as reference signal received quality (reference signal received quality, RSRQ) or reference signal received power (reference signal received power, RSRP). This is not limited.

For example, the fifth correspondence is a correspondence shown in the following Table 7. The terminal device may determine the preset quantity of levels based on the fifth correspondence and the strength of the received signal of the network device.

**Table 7**

| Signal strength | Preset quantity of levels |
|---|---|
| Greater than a third threshold | 1 |
| Greater than a second threshold and less than a third threshold | 2 |
| Greater than a first threshold and less than a second threshold | 3 |
| Less than a first threshold | 4 |

It should be noted that, weaker signal strength of the signal received by the terminal device from the network device may indicate a larger preset quantity of levels, so that a success rate of decoding the received Msg3 by the network device is increased, an access success rate of the terminal device is increased, an access delay of the terminal device is reduced, and transmission reliability of a communication system is improved.

Step 1103: The terminal device sends a Msg3 based on the second MCS level.

Based on the method in FIG. 11, the terminal device sends the Msg3 by using the second MCS level that is less than the first MCS level. This can increase a success rate of decoding the received Msg3 by the network device, so that an access success rate of the terminal device is increased, an access delay of the terminal device is reduced, and transmission reliability of a communication system is improved.

It should be noted that step 1101 to step 1103 may alternatively be used independently. To be specific, the terminal device may transmit one Msg3 based on the second MCS level in an initial transmission process, and transmit one Msg3 based on the second MCS level in a retransmission process. This is not limited.

Alternatively, different from the second MCS level shown in FIG. 11, an MCS table specified in a communication protocol may be rewritten; in other words, a new MCS table is introduced. For the Msg3 or data transmission with a special performance requirement, for example, data transmission in which hybrid automatic repeat request (hybrid automatic repeat request, HARQ) feedback is not performed after access, because there is no feedback from a user for this type of data transmission, transmission reliability of this type of data transmission needs to be ensured. The Msg3 also needs to be enhanced because the Msg3 involves an access delay of the terminal device. For a parameter indicated by an MCS field, a corresponding data transmission manner may be obtained through table lookup. The introduced new MCS table and an MCS table specified in an existing communication protocol may have a same target block error rate (block error rate, BLER), or may have different target BLERs. For example, a BLER corresponding to an existing MCS is between 0.1 and 0.00001. An MCS table shown in the following Table 8 may be used. A BLER corresponding to the MCS table may be between 0.1 and 0.00001 . When data transmission of a specific type, for example, the Msg3 is involved, the data transmission may directly correspond to the new MCS table.

**Table 8**

| MCS index IMCS | Modulation order Qm | Target bit rate Rx [1024] | Spectral efficiency |
|---|---|---|---|
| 0 | 2 | 120 | 0.1344 |
| 1 | 2 | 157 | 0.2066 |
| 2 | 2 | 193 | 0.2770 |
| 3 | 2 | 251 | 0.3902 |
| 4 | 2 | 308 | 0.5016 |
| 5 | 2 | 379 | 0.6402 |
| 6 | 2 | 449 | 0.7770 |
| 7 | 2 | 526 | 0.973 |
| 8 | 2 | 602 | 1.0758 |
| 9 | 2 | 679 | 1.2262 |
| 10 | 4 | 340 | 1.2281 |
| 11 | 4 | 378 | 1.4766 |
| 12 | 4 | 434 | 1.2953 |
| 13 | 4 | 490 | 1.3141 |
| 14 | 4 | 553 | 1.7602 |
| 15 | 4 | 616 | 1.8063 |
| 16 | 4 | 658 | 1.9703 |

Further, in an IoT communication scenario, the network device may divide a cell into different areas, and obtain a plurality of coverage levels through division based on an IoT coverage level parameter and a loss. Different coverage levels correspond to different data transmission manners. In this embodiment of this application, the Msg3 may also be transmitted in different manners at different coverage levels based on the methods shown in FIG. 3 to FIG. 11.

It should be noted that data transmission enhancement may not be limited to transmission of the Msg3, and may also be other data transmission, for example, uplink data transmission enhancement such as data transmission after access or ACK/NACK feedback transmission. This is not limited.

The foregoing mainly describes the solutions provided in embodiments of this application from a perspective of interaction between devices. It may be understood that to implement the foregoing functions, the device includes a hardware structure and/or a software module corresponding to each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, function modules of each device may be obtained through division based on the foregoing method examples. For example, the function modules may be obtained through division corresponding to the functions, or two or more functions may be integrated into one processing module. The integrated module may be implemented in a form of hardware, or may be implemented in a form of a software function module. It should be noted that, in embodiments of this application, module division is an example, and is merely a type of logical function division. During actual implementation, another division manner may be used.

When each function module is obtained through division based on each corresponding function, FIG. 12 shows a terminal device. A terminal device 120 may include a transceiver module 1201 and a processing module 1202. For example, the terminal device 120 may be a terminal device, or may be a chip used in the terminal device or another combined component, part, or the like that has a function of the terminal device. When the terminal device 120 is the terminal device, the transceiver module 1201 may be a transceiver, and the transceiver may include an antenna, a radio frequency circuit, and the like; and the processing module 1202 may be a processor (or a processing circuit), for example, a baseband processor, and the baseband processor may include one or more CPUs. When the terminal device 120 is the part that has the function of the terminal device, the transceiver module 1201 may be a radio frequency unit, and the processing module 1202 may be a processor (or a processing circuit), for example, a baseband processor. When the terminal device 120 is a chip system, the transceiver module 1201 may be an input/output interface of a chip (for example, a baseband chip), and the processing module 1202 may be a processor (or a processing circuit) in the chip system, and may include one or more central processing units. It should be understood that the transceiver module 1201 in this embodiment of this application may be implemented by a transceiver or a transceiver-related circuit component, and the processing module 1202 may be implemented by a processor or a processor-related circuit component (or referred to as a processing circuit).

For example, the transceiver module 1201 may be configured to perform all sending and receiving operations performed by the terminal device in the embodiments shown in FIG. 3 to FIG. 11, and/or configured to support another process of the technology described in this specification. The processing module 1202 may be configured to perform all operations other than sending and receiving operations performed by the terminal device in the embodiments shown in FIG. 3 to FIG. 11, and/or configured to support another process of the technology described in this specification.

The transceiver module 1201 is configured to obtain a first quantity N. The first quantity N indicates a number of repetition of a message 3 Msg3, or the first quantity N indicates a number of aggregation of the message 3 Msg3. The Msg3 is a message sent by the transceiver module 1201 through a physical uplink shared channel PUSCH in a random access process. The transceiver module 1201 is further configured to send N Msg3 based on the first quantity N. An initial transmission process is a process in which the terminal device sends the Msg3 for a first time.

In a possible design, the transceiver module 1201 is specifically configured to obtain a message 2 Msg2. The Msg2 is a message received by the transceiver module 1201 through a physical downlink shared channel PDSCH in the random access process, and the Msg2 includes the first quantity N.

In a possible design, the first quantity N is located in an uplink grant field of the Msg2.

In a possible design, the communication apparatus further includes the processing module 1202. The transceiver module 1201 is specifically configured to obtain a message 2 Msg2. The Msg2 is a message received by the transceiver module 1201 through a physical downlink shared channel PDSCH in the random access process. The Msg2 includes a PUSCH time domain resource allocation field. The PUSCH time domain resource allocation field includes a first index. The first index indicates a time domain resource occupied by the Msg3. The processing module 1202 is configured to determine the first quantity N based on a first correspondence and the first index. The first correspondence includes a correspondence between the first index and the first quantity N.

In a possible design, the transceiver module 1201 is specifically configured to obtain a message 2 Msg2. The Msg2 is a message received by the transceiver module 1201 through a physical downlink shared channel PDSCH in the random access process. The Msg2 includes a PUSCH frequency domain resource allocation field. The PUSCH frequency domain resource allocation field indicates locations of frequency domain resource blocks occupied by the N Msg3, or the PUSCH frequency domain resource allocation field indicates start locations of frequency domain resource blocks corresponding to the N Msg3 and lengths of the frequency domain resource blocks. The processing module 1202 is configured to determine the first quantity N based on the PUSCH frequency domain resource allocation field.

In a possible design, the transceiver module 1201 is specifically configured to obtain location information of a network device, and the processing module 1202 is configured to determine the first quantity N based on a second correspondence and the location information of the network device. The second correspondence includes a correspondence between the location information of the network device and the first quantity N.

In a possible design, the transceiver module 1201 is specifically configured to receive a system message from a network device. The system message includes the first quantity N.

In a possible design, the transceiver module 1201 is specifically configured to receive a signal from a network device, and the processing module 1202 is configured to determine the first quantity N based on a third correspondence and signal strength of the signal. The third correspondence includes a correspondence between the signal strength and the first quantity N.

In a possible design, the transceiver module 1201 is further configured to obtain first identification information. The first identification information indicates that the first quantity N indicates the number of repetition of the Msg3, or the first identification information indicates that the first quantity N indicates the number of aggregation of the Msg3.

In a possible design, the first identification information is located in the message 2 Msg2, radio resource control RRC signaling, media access control control element MAC CE signaling, or downlink control information DCI signaling, and the Msg2 is the message received by the transceiver module 1201 through the physical downlink shared channel PDSCH in the random access process.

In a possible design, the transceiver module 1201 is further configured to obtain first indication information, and the first indication information indicates a time domain resource occupied by a first Msg3 in the N Msg3. The processing module 1202 is configured to determine, based on the first indication information, a start orthogonal frequency division multiplexing OFDM symbol of a K^{th} Msg3 as a start OFDM symbol of a next slot of a slot in which a last OFDM symbol occupied by a (K-1)^{th} Msg3 is located, where K is less than or equal to N; or the processing module 1202 is configured to determine, based on the first indication information, a start OFDM symbol of a K^{th} Msg3 as a next OFDM symbol of a last OFDM symbol occupied by a (K-1)^{th} Msg3, where K is less than or equal to N.

In a possible design, the first indication information is the PUSCH time domain resource allocation field in the message 2 Msg2. The Msg2 is the message received by the transceiver module 1201 through the physical downlink shared channel PDSCH in the random access process, the PUSCH time domain resource allocation field includes the first index, and the first index indicates the time domain resource occupied by the Msg3.

In a possible design, the transceiver module 1201 is specifically configured to receive the radio resource control RRC signaling from the network device, and the RRC signaling includes the first indication information.

In a possible design, the transceiver module 1201 is further configured to obtain second indication information. The second indication information indicates the frequency domain resource occupied by each of the N Msg3. The processing module 1202 is configured to determine, based on the second indication information, the frequency domain resource occupied by each of the N Msg3.

In a possible design, the second indication information is the PUSCH frequency domain resource allocation field in the message 2 Msg2. The Msg2 is the message received by the transceiver module 1201 through the physical downlink shared channel PDSCH in the random access process. The PUSCH frequency domain resource allocation field indicates the location of the frequency domain resource block occupied by each Msg3, the PUSCH frequency domain resource allocation field indicates a start location of a frequency domain resource block corresponding to each Msg3 and a length of the frequency domain resource block, or the PUSCH frequency domain resource allocation field indicates a configuration rule of a location of a frequency domain resource block corresponding to each Msg3.

In a possible design, the transceiver module 1201 is specifically configured to receive the radio resource control RRC signaling from the network device, and the RRC signaling includes the second indication information.

In a possible design, the transceiver module 1201 is further configured to: after the transceiver module 1201 receives a negative acknowledgment NACK from the network device, obtain a first quantity M, and retransmit M Msg3 based on the first quantity M.

In a possible design, the transceiver module 1201 is further configured to obtain the message 2 Msg2. The Msg2 is the message received by the transceiver module 1201 through the physical downlink shared channel PDSCH in the random access process. The Msg2 includes a first MCS level. The processing module 1202 is configured to determine a second MCS level based on the first MCS level. The second MCS level is less than the first MCS level. The transceiver module 1201 is further configured to send the N Msg3 based on the second MCS level.

In a possible design, the transceiver module 1201 is further configured to obtain a preset quantity of levels, and the processing module 1202 is further configured to determine a difference between the first MCS level and the preset quantity of levels as the second MCS level.

In a possible design, the transceiver module 1201 is further configured to receive the preset quantity of levels from the network device; the transceiver module 1201 is further configured to obtain the location information of the network device, and the processing module 1202 is further configured to determine the preset quantity of levels based on the location information of the network device; or the transceiver module 1201 is further configured to receive the signal from the network device, and the processing module 1202 is further configured to determine the preset quantity of levels based on the signal strength of the signal.

In another possible implementation, the transceiver module 1201 in FIG. 12 may be replaced with a transceiver, and a function of the transceiver module 1201 may be integrated into the transceiver; and the processing module 1202 may be replaced with a processor, and a function of the processing module 1202 may be integrated into the processor. Further, the terminal device 120 shown in FIG. 12 may further include a memory. When the transceiver module 1201 is replaced by a transceiver, and the processing module 1202 is replaced by a processor, the terminal device 120 in this embodiment of this application may be considered as the communication apparatus shown in FIG. 2.

When each function module is obtained through division based on each corresponding function, FIG. 13 shows a network device. A network device 130 may include a transceiver module 1301 and a processing module 1302. For example, the network device 130 may be a network device, or may be a chip used in the network device or another combined component, part, or the like that has a function of the network device. When the network device 130 is the network device, the transceiver module 1301 may be a transceiver, and the transceiver may include an antenna, a radio frequency circuit, and the like; and the processing module 1302 may be a processor (or a processing circuit), for example, a baseband processor, and the baseband processor may include one or more CPUs. When the network device 130 is the part that has the function of the network device, the transceiver module 1301 may be a radio frequency unit, and the processing module 1302 may be a processor (or a processing circuit), for example, a baseband processor. When the network device 130 is a chip system, the transceiver module 1301 may be an input/output interface of a chip (for example, a baseband chip), and the processing module 1302 may be a processor (or a processing circuit) in the chip system, and may include one or more central processing units. It should be understood that the transceiver module 1301 in this embodiment of this application may be implemented by a transceiver or a transceiver-related circuit component, and the processing module 1302 may be implemented by a processor or a processor-related circuit component (or referred to as a processing circuit).

For example, the transceiver module 1301 may be configured to perform all sending and receiving operations performed by the network device in the embodiments shown in FIG. 3 to FIG. 11, and/or configured to support another process of the technology described in this specification. The processing module 1302 may be configured to perform all operations other than sending and receiving operations performed by the network device in the embodiments shown in FIG. 3 to FIG. 11, and/or configured to support another process of the technology described in this specification.

The transceiver module 1301 is configured to: send, to a terminal device, a message 2 Msg2 used to schedule a message 3 Msg3, and receive N messages 3 Msg3 sent by the terminal device based on a first quantity N in an initial transmission process. The first quantity N indicates a number of repetition of the message 3 Msg3, or the first quantity N indicates a number of aggregation of the message 3 Msg3; the Msg2 is a message sent by the transceiver module 1301 through a physical downlink shared channel PDSCH in a random access process; the Msg3 is a message received by the transceiver module 1301 through a physical uplink shared channel PUSCH in the random access process; and the initial transmission process is a process in which the transceiver module 1301 sends the Msg3 for a first time.

In a possible design, the transceiver module 1301 is further configured to send the Msg2 including the first quantity N to the terminal device.

In a possible design, the first quantity N is located in an uplink grant field of the Msg2.

In a possible design, the Msg2 includes a PUSCH time domain resource allocation field, the PUSCH time domain resource allocation field includes a first index, and the first index indicates a time domain resource occupied by the Msg3, so that the terminal device determines the first quantity N based on a first correspondence and the first index. The first correspondence includes a correspondence between the first index and the first quantity N.

In a possible design, the Msg2 includes a PUSCH frequency domain resource allocation field, and the PUSCH frequency domain resource allocation field indicates locations of frequency domain resource blocks occupied by the N Msg3, or the PUSCH frequency domain resource allocation field indicates start locations of frequency domain resource blocks corresponding to the N Msg3 and lengths of the frequency domain resource blocks, so that the terminal device determines the first quantity N based on the PUSCH frequency domain resource allocation field.

In a possible design, the transceiver module 1301 is further configured to send location information of the network device to the terminal device, so that the terminal device determines the first quantity N based on a second correspondence and the location information of the network device. The second correspondence includes a correspondence between the location information of the network device and the first quantity N.

In a possible design, the transceiver module 1301 is further configured to send a system message including the first quantity N to the terminal device.

In a possible design, the transceiver module 1301 is further configured to send a signal to the terminal device, so that the terminal device determines the first quantity N based on a third correspondence and signal strength of the signal. The third correspondence includes a correspondence between the signal strength and the first quantity N.

In a possible design, the transceiver module 1301 is further configured to send first identification information to the terminal device. The first identification information indicates that the first quantity N indicates the number of repetition of the Msg3, or the first identification information indicates that the first quantity N indicates the number of aggregation of the Msg3.

In a possible design, the first identification information is located in the message 2 Msg2, radio resource control RRC signaling, media access control control element MAC CE signaling, or downlink control information DCI signaling.

In a possible design, the transceiver module 1301 is further configured to send, to the terminal device, first indication information indicating a time domain resource occupied by a first Msg3 in the N Msg3, so that the terminal device determines, based on the first indication information, a start orthogonal frequency division multiplexing OFDM symbol of a K^{th} Msg3 as a start OFDM symbol of a next slot of a slot in which a last OFDM symbol occupied by a (K-1)^{th} Msg3 is located, where K is less than or equal to N; or the terminal device determines, based on the first indication information, a start OFDM symbol of a K^{th} Msg3 as a next OFDM symbol of a last OFDM symbol occupied by a (K-1)^{th} Msg3, where K is less than or equal to N.

In a possible design, the first indication information is the PUSCH time domain resource allocation field in the message 2 Msg2, the PUSCH time domain resource allocation field includes the first index, and the first index indicates the time domain resource occupied by the Msg3.

In a possible design, the transceiver module 1301 is further configured to send radio resource control RRC signaling including the first indication information to the terminal device.

In a possible design, the transceiver module 1301 is further configured to send, to the terminal device, second indication information indicating the frequency domain resource occupied by each of the N Msg3, so that the terminal device determines, based on the second indication information, the frequency domain resource occupied by each of the N Msg3.

In a possible design, the second indication information is the PUSCH frequency domain resource allocation field in the message 2 Msg2. The PUSCH frequency domain resource allocation field indicates the location of the frequency domain resource block occupied by each Msg3, the PUSCH frequency domain resource allocation field indicates a start location of a frequency domain resource block corresponding to each Msg3 and a length of the frequency domain resource block, or the PUSCH frequency domain resource allocation field indicates a configuration rule of a location of a frequency domain resource block corresponding to each Msg3.

In a possible design, the transceiver module 1301 is further configured to send RRC signaling including the second indication information to the terminal device.

In a possible design, the network device 130 further includes the processing module 1302. The processing module 1302 is configured to decode the received N Msg3. The transceiver module 1301 is further configured to: after the processing module 1302 fails to decode the received N Msg3, send a negative acknowledgment NACK to the terminal device, and receive M Msg3 retransmitted by the terminal device in a retransmission process.

In a possible design, the Msg2 includes a first MCS level, so that the terminal device determines a second MCS level based on the first MCS level, and sends the N Msg3 based on the second MCS level in the initial transmission process. The second MCS level is less than the first MCS level.

In a possible design, the second MCS level is a difference between the first MCS level and a preset quantity of levels.

In a possible design, the transceiver module 1301 is further configured to send the preset quantity of levels to the terminal device; the transceiver module 1301 is further configured to send the location information of the network device to the terminal device, so that the terminal device determines the preset quantity of levels based on the location information of the network device; or the transceiver module 1301 is further configured to send the signal to the terminal device, so that the terminal device determines the preset quantity of levels based on the signal strength of the signal.

In another possible implementation, the transceiver module 1301 in FIG. 13 may be replaced with a transceiver, and a function of the transceiver module 1301 may be integrated into the transceiver; and the processing module 1302 may be replaced with a processor, and a function of the processing module 1302 may be integrated into the processor. Further, the network device 130 shown in FIG. 13 may further include a memory. When the transceiver module 1301 is replaced by a transceiver, and the processing module 1302 is replaced by a processor, the network device 130 in this embodiment of this application may be considered as the communication apparatus shown in FIG. 2.

An embodiment of this application further provides a computer-readable storage medium. All or some of the processes in the foregoing method embodiments may be implemented by a computer program instructing related hardware. The program may be stored in the computer-readable storage medium. When the program is executed, the processes of the foregoing method embodiments may be included. The computer-readable storage medium may be an internal storage unit of the terminal (including a data transmit end and/or a data receive end) in any one of the foregoing embodiments, for example, a hard disk drive or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like configured on the terminal. Further, the computer-readable storage medium may alternatively include both the internal storage unit of the terminal and the external storage device. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. In addition, the terms "including", "having", or any other variant thereof are intended to cover a non-exclusive inclusion. For example, a process, a method, a system, a product, or a device that includes a series of steps or units is not limited to the listed steps or units, but optionally further includes unlisted steps or units, or optionally further includes other inherent steps or units of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

The foregoing description about the implementations allows a person skilled in the art to clearly understand that, for the purpose of convenient and brief description, division into only the foregoing function modules is used as an example for description. During actual application, the foregoing functions can be allocated to different function modules for implementation as required. In other words, an internal structure of an apparatus is divided into different function modules to implement all or some of the functions described above.

In the several embodiments provided in this application, it should be understood that the disclosed apparatuses and methods may be implemented in other manners. For example, the described apparatus embodiments are merely examples. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

Units described as separate parts may or may not be physically separate, and parts displayed as units may be one or more physical units, and may be located in one place, or may be distributed in different places. All or a part of the units may be selected based on actual requirements to achieve the objectives of the solutions of the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for indicating a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method applicable to a non-terrestrial communication network NTN, comprising:
obtaining, by a terminal device, a first quantity N, wherein the first quantity N indicates a number of repetition of a message 3 Msg3, or the first quantity N indicates a number of aggregation of a message 3 Msg3, and the Msg3 is a message sent by the terminal device through a physical uplink shared channel PUSCH in a random access process; and
sending, by the terminal device, N Msg3 based on the first quantity N in an initial transmission process, wherein the initial transmission process is a process in which the terminal device sends the Msg3 for a first time.

2. The method according to claim 1, wherein the obtaining, by a terminal device, a first quantity N comprises:
obtaining, by the terminal device, a message 2 Msg2, wherein the Msg2 is a message received by the terminal device through a physical downlink shared channel PDSCH in the random access process, and the Msg2 comprises the first quantity N.

3. The method according to claim 2, wherein
the first quantity N is located in an uplink grant field of the Msg2.

4. The method according to claim 1, wherein the obtaining, by a terminal device, a first quantity N comprises:
obtaining, by the terminal device, a message 2 Msg2, wherein the Msg2 is a message received by the terminal device through a physical downlink shared channel PDSCH in the random access process, the Msg2 comprises a PUSCH time domain resource allocation field, the PUSCH time domain resource allocation field comprises a first index, and the first index indicates a time domain resource occupied by the Msg3; and
determining, by the terminal device, the first quantity N based on a first correspondence and the first index, wherein the first correspondence comprises a correspondence between the first index and the first quantity N.

5. The method according to claim 1, wherein the obtaining, by a terminal device, a first quantity N comprises:
obtaining, by the terminal device, a message 2 Msg2, wherein the Msg2 is a message received by the terminal device through a physical downlink shared channel PDSCH in the random access process, the Msg2 comprises a PUSCH frequency domain resource allocation field, and the PUSCH frequency domain resource allocation field indicates locations of frequency domain resource blocks occupied by the N Msg3, or the PUSCH frequency domain resource allocation field indicates start locations of frequency domain resource blocks corresponding to the N Msg3 and lengths of the frequency domain resource blocks; and
determining, by the terminal device, the first quantity N based on the PUSCH frequency domain resource allocation field.

6. The method according to claim 1, wherein the obtaining, by a terminal device, a first quantity N comprises:
obtaining, by the terminal device, location information of a network device; and
determining, by the terminal device, the first quantity N based on a second correspondence and the location information of the network device, wherein the second correspondence comprises a correspondence between the location information of the network device and the first quantity N.

7. The method according to claim 1, wherein the obtaining, by a terminal device, a first quantity N comprises:
receiving, by the terminal device, a system message from a network device, wherein the system message comprises the first quantity N.

8. The method according to claim 1, wherein the obtaining, by a terminal device, a first quantity N comprises:
receiving, by the terminal device, a signal from a network device; and
determining, by the terminal device, the first quantity N based on a third correspondence and signal strength of the signal, wherein the third correspondence comprises a correspondence between the signal strength and the first quantity N.

9. The method according to any one of claims 1 to 8, wherein the method further comprises:
obtaining, by the terminal device, first identification information, wherein the first identification information indicates that the first quantity N indicates the number of repetition of the Msg3, or the first identification information indicates that the first quantity N indicates the number of aggregation of the Msg3.

10. The method according to claim 9, wherein
the first identification information is located in the message 2 Msg2, radio resource control RRC signaling, media access control control element MAC CE signaling, or downlink control information DCI signaling, and the Msg2 is the message received by the terminal device through the physical downlink shared channel PDSCH in the random access process.

11. The method according to any one of claims 1 to 10, wherein the method further comprises:
obtaining, by the terminal device, first indication information, wherein the first indication information indicates a time domain resource occupied by a first Msg3 in the N Msg3; and
determining, by the terminal device based on the first indication information, a start orthogonal frequency division multiplexing OFDM symbol of a K^{th} Msg3 as a start OFDM symbol of a next slot of a slot in which a last OFDM symbol occupied by a (K-1)^{th} Msg3 is located, wherein K is less than or equal to N; or
determining, by the terminal device based on the first indication information, a start OFDM symbol of a K^{th} Msg3 as a next OFDM symbol of a last OFDM symbol occupied by a (K-1)^{th} Msg3, wherein K is less than or equal to N.

12. The method according to claim 11, wherein
the first indication information is the PUSCH time domain resource allocation field in the message 2 Msg2, wherein the Msg2 is the message received by the terminal device through the physical downlink shared channel PDSCH in the random access process, the PUSCH time domain resource allocation field comprises the first index, and the first index indicates the time domain resource occupied by the Msg3.

13. The method according to claim 11, wherein the obtaining, by the terminal device, first indication information comprises:
receiving, by the terminal device, radio resource control the RRC signaling from the network device, wherein the RRC signaling comprises the first indication information.

14. The method according to any one of claims 1 to 13, wherein the method further comprises:
obtaining, by the terminal device, second indication information, wherein the second indication information indicates the frequency domain resource occupied by each of the N Msg3; and
determining, by the terminal device based on the second indication information, the frequency domain resource occupied by each of the N Msg3.

15. The method according to claim 14, wherein
the second indication information is the PUSCH frequency domain resource allocation field in the message 2 Msg2, the Msg2 is the message received by the terminal device through the physical downlink shared channel PDSCH in the random access process, and the PUSCH frequency domain resource allocation field indicates the location of the frequency domain resource block occupied by each Msg3, the PUSCH frequency domain resource allocation field indicates the start location of the frequency domain resource block corresponding to each Msg3 and a length of the frequency domain resource block, or the PUSCH frequency domain resource allocation field indicates a configuration rule of the location of the frequency domain resource block corresponding to each Msg3.

16. The method according to claim 14, wherein the obtaining, by the terminal device, second indication information comprises:
receiving, by the terminal device, the radio resource control RRC signaling from the network device, wherein the RRC signaling comprises the second indication information.

17. The method according to any one of claims 1 to 16, wherein after the sending, by the terminal device, N Msg3 based on the first quantity N in an initial transmission process, the method further comprises:
after the terminal device receives a negative acknowledgment NACK from the network device, obtaining, by the terminal device, a first quantity M, and retransmitting M Msg3 based on the first quantity M.

18. The method according to any one of claims 1 to 17, wherein the sending, by the terminal device, N Msg3 based on the first quantity N in an initial transmission process comprises:
obtaining, by the terminal device, the message 2 Msg2, wherein the Msg2 is the message received by the terminal device through the physical downlink shared channel PDSCH in the random access process, and the Msg2 comprises a first MCS level;
determining, by the terminal device, a second MCS level based on the first MCS level, wherein the second MCS level is less than the first MCS level; and
sending, by the terminal device, the N Msg3 based on the second MCS level in the initial transmission process.

19. The method according to claim 18, wherein the determining, by the terminal device, a second MCS level based on the first MCS level comprises:
obtaining, by the terminal device, a preset quantity of levels; and
determining, by the terminal device, a difference between the first MCS level and the preset quantity of levels as the second MCS level.

20. The method according to claim 19, wherein the obtaining, by the terminal device, a preset quantity of levels comprises:
receiving, by the terminal device, the preset quantity of levels from the network device;
obtaining, by the terminal device, the location information of the network device, and determining, by the terminal device, the preset quantity of levels based on the location information of the network device; or
receiving, by the terminal device, the signal from the network device, and determining, by the terminal device, the preset quantity of levels based on the signal strength of the signal.

21. A communication method applicable to a non-terrestrial communication network NTN, comprising:
sending, by a network device, a message 2 Msg2 to a terminal device, wherein the Msg2 is used to schedule a message 3 Msg3, and the Msg2 is a message sent by the network device through a physical downlink shared channel PDSCH in a random access process; and
receiving, by the network device, N messages 3 Msg3 sent by the terminal device in an initial transmission process based on a first quantity N, wherein the first quantity N indicates a number of repetition of the Msg3, or the first quantity N indicates a number of aggregation of the Msg3, the Msg3 is a message received by the network device through a physical uplink shared channel PUSCH in the random access process, and the initial transmission process is a process in which the terminal device sends the Msg3 for a first time.

22. The method according to claim 21, wherein
the Msg2 comprises the first quantity N.

23. The method according to claim 22, wherein
the first quantity N is located in an uplink grant field of the Msg2.

24. The method according to claim 21, wherein
the Msg2 comprises a PUSCH time domain resource allocation field, the PUSCH time domain resource allocation field comprises a first index, the first index indicates a time domain resource occupied by the Msg3, the first index is used to determine the first quantity N based on a first correspondence, and the first correspondence comprises a correspondence between the first index and the first quantity N.

25. The method according to claim 21, wherein
the Msg2 comprises a PUSCH frequency domain resource allocation field, the PUSCH frequency domain resource allocation field indicates locations of frequency domain resource blocks occupied by the N Msg3, or the PUSCH frequency domain resource allocation field indicates start locations of frequency domain resource blocks corresponding to the N Msg3 and lengths of the frequency domain resource blocks, and the PUSCH frequency domain resource allocation field is further used to determine the first quantity N.

26. The method according to claim 21, wherein
sending, by the network device, location information of the network device to the terminal device, wherein the location information of the network device is used to determine the first quantity N based on a second correspondence, and the second correspondence comprises a correspondence between the location information of the network device and the first quantity N.

27. The method according to claim 21, wherein
sending, by the network device, a system message to the terminal device, wherein the system message comprises the first quantity N.

28. The method according to claim 21, wherein
sending, by the network device, a signal to the terminal device, wherein signal strength of the signal is used to determine the first quantity N based on a third correspondence, and the third correspondence comprises a correspondence between the signal strength and the first quantity N.

29. The method according to any one of claims 21 to 28, wherein the method further comprises:
sending, by the network device, first identification information to the terminal device, wherein the first identification information indicates that the first quantity N indicates the number of repetition of the Msg3, or the first identification information indicates that the first quantity N indicates the number of aggregation of the Msg3.

30. The method according to claim 29, wherein
the first identification information is located in the Msg2, radio resource control RRC signaling, media access control control element MAC CE signaling, or downlink control information DCI signaling.

31. The method according to any one of claims 21 to 30, wherein the method further comprises:
sending, by the network device, first indication information to the terminal device, wherein the first indication information indicates a time domain resource occupied by a first Msg3 in the N Msg3; and
the first indication information is used to determine a start orthogonal frequency division multiplexing OFDM symbol of a K^{th} Msg3 as a start OFDM symbol of a next slot of a slot in which a last OFDM symbol occupied by a (K-1)^{th} Msg3 is located, wherein K is less than or equal to N; or
the first indication information is used to determine a start OFDM symbol of a K^{th} Msg3 as a next OFDM symbol of a last OFDM symbol occupied by a (K-1)^{th} Msg3, wherein K is less than or equal to N.

32. The method according to claim 31, wherein
the first indication information is the PUSCH time domain resource allocation field in the Msg2, the PUSCH time domain resource allocation field comprises the first index, and the first index indicates the time domain resource occupied by the Msg3.

33. The method according to claim 31, wherein
sending, by the network device, radio resource control RRC signaling to the terminal device, wherein the RRC signaling comprises the first indication information.

34. The method according to any one of claims 21 to 33, wherein the method further comprises:
sending, by the network device, second indication information to the terminal device, wherein the second indication information indicates the frequency domain resource occupied by each of the N Msg3.

35. The method according to claim 34, wherein
the second indication information is the PUSCH frequency domain resource allocation field in the Msg2, and the PUSCH frequency domain resource allocation field indicates the location of the frequency domain resource block occupied by each Msg3, the PUSCH frequency domain resource allocation field indicates a start location of a frequency domain resource block corresponding to each Msg3 and a length of the frequency domain resource block, or the PUSCH frequency domain resource allocation field indicates a configuration rule of a location of a frequency domain resource block corresponding to each Msg3.

36. The method according to claim 34, wherein
sending, by the network device, radio resource control RRC signaling to the terminal device, wherein the RRC signaling comprises the second indication information.

37. The method according to any one of claims 21 to 36, wherein after the network device fails to decode the received N Msg3, the method further comprises:
sending, by the network device, a negative acknowledgment NACK to the terminal device; and
receiving, by the network device, M Msg3 retransmitted by the terminal device in a retransmission process.

38. The method according to any one of claims 21 to 37, wherein
the Msg2 comprises a first MCS level, the first MCS level is used to determine a second MCS level, the second MCS level is used to send the N Msg3 in the initial transmission process, and the second MCS level is less than the first MCS level.

39. The method according to claim 38, wherein
the second MCS level is a difference between the first MCS level and a preset quantity of levels.

40. The method according to claim 39, wherein
sending, by the network device, the preset quantity of levels to the terminal device;
sending, by the network device, the location information of the network device to the terminal device, wherein the location information of the network device is used to determine the preset quantity of levels; or
sending, by the network device, the signal to the terminal device, wherein the signal strength of the signal is used to determine the preset quantity of levels.

41. A communication apparatus applicable to a non-terrestrial communication network NTN, comprising:
a transceiver module, configured to obtain a first quantity N, wherein the first quantity N indicates a number of repetition of a message 3 Msg3, or the first quantity N indicates a number of aggregation of a message 3 Msg3, and the Msg3 is a message sent by the transceiver module through a physical uplink shared channel PUSCH in a random access process, wherein
the transceiver module is further configured to send N Msg3 based on the first quantity N in an initial transmission process, wherein the initial transmission process is a process in which the transceiver module sends the Msg3 for a first time.

42. The apparatus according to claim 41, wherein
the transceiver module is specifically configured to obtain a message 2 Msg2, wherein the Msg2 is a message received by the transceiver module through a physical downlink shared channel PDSCH in the random access process, and the Msg2 comprises the first quantity N.

43. The apparatus according to claim 42, wherein
the first quantity N is located in an uplink grant field of the Msg2.

44. The apparatus according to claim 41, wherein the communication apparatus further comprises a processing module;
the transceiver module is specifically configured to obtain a message 2 Msg2, wherein the Msg2 is a message received by the transceiver module through a physical downlink shared channel PDSCH in the random access process, the Msg2 comprises a PUSCH time domain resource allocation field, the PUSCH time domain resource allocation field comprises a first index, and the first index indicates a time domain resource occupied by the Msg3; and
the processing module is configured to determine the first quantity N based on a first correspondence and the first index, wherein the first correspondence comprises a correspondence between the first index and the first quantity N.

45. The apparatus according to claim 41, wherein the communication apparatus further comprises a processing module;
the transceiver module is specifically configured to obtain a message 2 Msg2, wherein the Msg2 is a message received by the transceiver module through a physical downlink shared channel PDSCH in the random access process, the Msg2 comprises a PUSCH frequency domain resource allocation field, and the PUSCH frequency domain resource allocation field indicates locations of frequency domain resource blocks occupied by the N Msg3, or the PUSCH frequency domain resource allocation field indicates start locations of frequency domain resource blocks corresponding to the N Msg3 and lengths of the frequency domain resource blocks; and
the processing module is configured to determine the first quantity N based on the PUSCH frequency domain resource allocation field.

46. The apparatus according to claim 41, wherein the communication apparatus further comprises a processing module;
the transceiver module is specifically configured to obtain location information of a network device; and
the processing module is configured to determine the first quantity N based on a second correspondence and the location information of the network device, wherein the second correspondence comprises a correspondence between the location information of the network device and the first quantity N.

47. The apparatus according to claim 41, wherein
the transceiver module is specifically configured to receive a system message from a network device, wherein the system message comprises the first quantity N.

48. The apparatus according to claim 41, wherein that the transceiver module obtains the first quantity N comprises:
receiving, by the transceiver module, a signal from a network device; and
determining, by the processing module, the first quantity N based on a third correspondence and signal strength of the signal, wherein the third correspondence comprises a correspondence between the signal strength and the first quantity N.

49. The apparatus according to any one of claims 41 to 48, wherein
obtaining, by the transceiver module, first identification information, wherein the first identification information indicates that the first quantity N indicates the number of repetition of the Msg3, or the first identification information indicates that the first quantity N indicates the number of aggregation of the Msg3.

50. The apparatus according to claim 49, wherein
the first identification information is located in the message 2 Msg2, radio resource control RRC signaling, media access control control element MAC CE signaling, or downlink control information DCI signaling, and the Msg2 is the message received by the transceiver module through the physical downlink shared channel PDSCH in the random access process.

51. The apparatus according to any one of claims 41 to 50, wherein
the transceiver module is further configured to obtain first indication information, wherein the first indication information indicates a time domain resource occupied by a first Msg3 in the N Msg3; and
the processing module is further configured to determine, based on the first indication information, a start orthogonal frequency division multiplexing OFDM symbol of a K^{th} Msg3 as a start OFDM symbol of a next slot of a slot in which a last OFDM symbol occupied by a (K-1)^{th} Msg3 is located, wherein K is less than or equal to N; or
the processing module is further configured to determine, based on the first indication information, a start OFDM symbol of a K^{th} Msg3 as a next OFDM symbol of a last OFDM symbol occupied by a (K-1)^{th} Msg3, wherein K is less than or equal to N.

52. The apparatus according to claim 51, wherein
the first indication information is the PUSCH time domain resource allocation field in the message 2 Msg2, the Msg2 is the message received by the transceiver module through the physical downlink shared channel PDSCH in the random access process, the PUSCH time domain resource allocation field comprises the first index, and the first index indicates the time domain resource occupied by the Msg3.

53. The apparatus according to claim 51, wherein that the transceiver module obtains the first indication information comprises:
the transceiver module receives the radio resource control RRC signaling from the network device, wherein the RRC signaling comprises the first indication information.

54. The apparatus according to any one of claims 41 to 53, wherein
the transceiver module is further configured to obtain second indication information, wherein the second indication information indicates the frequency domain resource occupied by each of the N Msg3; and
the processing module is further configured to determine, based on the second indication information, the frequency domain resource occupied by each of the N Msg3.

55. The apparatus according to claim 54, wherein
the second indication information is the PUSCH frequency domain resource allocation field in the message 2 Msg2, the Msg2 is the message received by the transceiver module through the physical downlink shared channel PDSCH in the random access process, and the PUSCH frequency domain resource allocation field indicates the location of the frequency domain resource block occupied by each Msg3, the PUSCH frequency domain resource allocation field indicates a start location of a frequency domain resource block corresponding to each Msg3 and a length of the frequency domain resource block, or the PUSCH frequency domain resource allocation field indicates a configuration rule of a location of a frequency domain resource block corresponding to each Msg3.

56. The apparatus according to claim 54, wherein that the transceiver module obtains the second indication information comprises:
receiving, by the transceiver module, the radio resource control RRC signaling from the network device, wherein the RRC signaling comprises the second indication information.

57. The apparatus according to any one of claims 41 to 56, wherein after the transceiver module sends the N Msg3 based on the first quantity N in the initial transmission process,
after the transceiver module receives a negative acknowledgment NACK from the network device, the transceiver module is further configured to obtain a first quantity M and retransmit M Msg3 based on the first quantity M.

58. The apparatus according to any one of claims 41 to 57, wherein that the transceiver module sends the N Msg3 based on the first quantity N in the initial transmission process comprises:
obtaining, by the transceiver module, the message 2 Msg2, wherein the Msg2 is the message received by the transceiver module through the physical downlink shared channel PDSCH in the random access process, and the Msg2 comprises a first MCS level;
determining, by the processing module, a second MCS level based on the first MCS level, wherein the second MCS level is less than the first MCS level; and
sending, by the transceiver module, the N Msg3 based on the second MCS level in the initial transmission process.

59. The apparatus according to claim 58, wherein that the processing module determines the second MCS level based on the first MCS level comprises:
obtaining, by the transceiver module, a preset quantity of levels; and
determining, by the processing module, a difference between the first MCS level and the preset quantity of levels as the second MCS level.

60. The apparatus according to claim 59, wherein that the transceiver module obtains the preset quantity of levels comprises:
receiving, by the transceiver module, the preset quantity of levels from the network device;
obtaining, by the transceiver module, the location information of the network device, and determining, by the processing module, the preset quantity of levels based on the location information of the network device; or
receiving, by the transceiver module, the signal from the network device, and determining, by the terminal device, the preset quantity of levels based on the signal strength of the signal.

61. A communication apparatus applicable to a non-terrestrial communication network NTN, comprising:
a transceiver module, configured to send a message 2 Msg2 to a terminal device, wherein the Msg2 is used to schedule a message 3 Msg3, and the Msg2 is a message sent by the transceiver module through a physical downlink shared channel PDSCH in a random access process; and
the transceiver module is further configured to receive N messages 3 Msg3 sent by the terminal device in an initial transmission process based on a first quantity N, wherein the first quantity N indicates a number of repetition of the Msg3, or the first quantity N indicates a number of aggregation of the Msg3, the Msg3 is a message received by the transceiver module through a physical uplink shared channel PUSCH in the random access process, and the initial transmission process is a process in which the terminal device sends the Msg3 for a first time.

62. The apparatus according to claim 61, wherein
the Msg2 comprises the first quantity N.

63. The apparatus according to claim 62, wherein
the first quantity N is located in an uplink grant field of the Msg2.

64. The apparatus according to claim 61, wherein
the Msg2 comprises a PUSCH time domain resource allocation field, the PUSCH time domain resource allocation field comprises a first index, the first index indicates a time domain resource occupied by the Msg3, the first index is used to determine the first quantity N based on a first correspondence, and the first correspondence comprises a correspondence between the first index and the first quantity N.

65. The apparatus according to claim 61, wherein
the Msg2 comprises a PUSCH frequency domain resource allocation field, the PUSCH frequency domain resource allocation field indicates locations of frequency domain resource blocks occupied by the N Msg3, or the PUSCH frequency domain resource allocation field indicates start locations of frequency domain resource blocks corresponding to the N Msg3 and lengths of the frequency domain resource blocks, and the PUSCH frequency domain resource allocation field is further used to determine the first quantity N.

66. The apparatus according to claim 61, wherein
the transceiver module is further configured to send location information of a network device to the terminal device, wherein the location information of the network device is used to determine the first quantity N based on a second correspondence, and the second correspondence comprises a correspondence between the location information of the network device and the first quantity N.

67. The apparatus according to claim 61, wherein
the transceiver module is further configured to send a system message to the terminal device, wherein the system message comprises the first quantity N.

68. The apparatus according to claim 61, wherein
the transceiver module is further configured to send a signal to the terminal device, wherein signal strength of the signal is used to determine the first quantity N based on a third correspondence, and the third correspondence comprises a correspondence between the signal strength and the first quantity N.

69. The apparatus according to any one of claims 61 to 68, wherein the method further comprises:
the transceiver module is further configured to send first identification information to the terminal device, wherein the first identification information indicates that the first quantity N indicates the number of repetition of the Msg3, or the first identification information indicates that the first quantity N indicates the number of aggregation of the Msg3.

70. The apparatus according to claim 69, wherein
the first identification information is located in the Msg2, radio resource control RRC signaling, media access control control element MAC CE signaling, or downlink control information DCI signaling.

71. The apparatus according to any one of claims 61 to 70, wherein the method further comprises:
the transceiver module is further configured to send first indication information to the terminal device, wherein the first indication information indicates a time domain resource occupied by a first Msg3 in the N Msg3; and
the first indication information is used to determine a start orthogonal frequency division multiplexing OFDM symbol of a K^{th} Msg3 as a start OFDM symbol of a next slot of a slot in which a last OFDM symbol occupied by a (K-1)^{th} Msg3 is located, wherein K is less than or equal to N; or
the first indication information is used to determine a start OFDM symbol of a K^{th} Msg3 as a next OFDM symbol of a last OFDM symbol occupied by a (K-1)^{th} Msg3, wherein K is less than or equal to N.

72. The apparatus according to claim 71, wherein
the first indication information is the PUSCH time domain resource allocation field in the Msg2, the PUSCH time domain resource allocation field comprises the first index, and the first index indicates the time domain resource occupied by the Msg3.

73. The apparatus according to claim 71, wherein
the transceiver module is further configured to send radio resource control RRC signaling to the terminal device, wherein the RRC signaling comprises the first indication information.

74. The apparatus according to any one of claims 61 to 73, wherein the method further comprises:
the transceiver module is further configured to send second indication information to the terminal device, wherein the second indication information indicates the frequency domain resource occupied by each of the N Msg3.

75. The apparatus according to claim 74, wherein
the second indication information is the PUSCH frequency domain resource allocation field in the Msg2, and the PUSCH frequency domain resource allocation field indicates the location of the frequency domain resource block occupied by each Msg3, the PUSCH frequency domain resource allocation field indicates a start location of a frequency domain resource block corresponding to each Msg3 and a length of the frequency domain resource block, or the PUSCH frequency domain resource allocation field indicates a configuration rule of a location of a frequency domain resource block corresponding to each Msg3.

76. The apparatus according to claim 74, wherein
the transceiver module is further configured to send radio resource control RRC signaling to the terminal device, wherein the RRC signaling comprises the second indication information.

77. The apparatus according to any one of claims 61 to 76, wherein after the processing module fails to decode the received N Msg3, the method further comprises:
the transceiver module is further configured to send a negative acknowledgment NACK to the terminal device; and
the transceiver module is further configured to receive M Msg3 retransmitted by the terminal device in a retransmission process.

78. The apparatus according to any one of claims 61 to 77, wherein
the Msg2 comprises a first MCS level, the first MCS level is used to determine a second MCS level, the second MCS level is used to send the N Msg3 in the initial transmission process, and the second MCS level is less than the first MCS level.

79. The apparatus according to claim 78, wherein
the second MCS level is a difference between the first MCS level and a preset quantity of levels.

80. The apparatus according to claim 79, wherein
the transceiver module is further configured to send the preset quantity of levels to the terminal device;
the transceiver module is further configured to send the location information of the network device to the terminal device, wherein the location information of the network device is used to determine the preset quantity of levels; or
the transceiver module is further configured to send the signal to the terminal device, wherein the signal strength of the signal is used to determine the preset quantity of levels.

81. A communication apparatus applicable to a non-terrestrial communication network NTN, wherein the communication apparatus comprises a processor and a memory, the processor is coupled to the memory, the processor is configured to run a computer program or instructions, the memory is configured to store the computer program or the instructions, and when the processor executes computer instructions or the instructions, the communication method applicable to a non-terrestrial communication network NTN according to any one of claims 1 to 20 is performed, or the communication method applicable to a non-terrestrial communication network NTN according to any one of claims 21 to 40 is performed.

82. A communication apparatus applicable to a non-terrestrial communication network NTN, wherein the communication apparatus comprises a communication interface and a logic circuit, the communication interface is coupled to the logic circuit, the logic circuit is configured to perform the communication method applicable to a non-terrestrial communication network NTN according to any one of claims 1 to 20, or is configured to perform the communication method applicable to a non-terrestrial communication network NTN according to any one of claims 21 to 40, and the communication interface is configured to communicate with another module other than the communication apparatus.

83. A computer-readable storage medium, wherein the computer-readable storage medium stores computer instructions or a program, and when the computer instructions or the program is run on a computer, the computer is enabled to perform the communication method applicable to a non-terrestrial communication network NTN according to any one of claims 1 to 20, or perform the communication method applicable to a non-terrestrial communication network NTN according to any one of claims 21 to 40.

84. A computer program product, wherein the computer program product comprises computer instructions, and when the computer program product is run on a computer, the computer is enabled to perform the communication method applicable to a non-terrestrial communication network NTN according to any one of claims 1 to 20, or perform the communication method applicable to a non-terrestrial communication network NTN according to any one of claims 21 to 40.

85. A computer program, wherein when the computer program is run on a computer, the computer is enabled to perform the communication method applicable to a non-terrestrial communication network NTN according to any one of claims 1 to 20, or perform the communication method applicable to a non-terrestrial communication network NTN according to any one of claims 21 to 40.

86. A communication system, wherein the communication system comprises the communication apparatus applicable to a non-terrestrial communication network NTN according to any one of claims 41 to 60 and the communication apparatus applicable to a non-terrestrial communication network NTN according to any one of claims 61 to 80.
